# EUROPÄISCHE PATENTSCHRIFT

(11) **EP 3 394 370 B1**
(45) Veröffentlichungstag und Bekanntmachung des Hinweises auf die Patenterteilung: **14.10.2020**
(21) Anmeldenummer: 16813221.5
(22) Anmeldetag: 28.11.2016
(51) Int. Cl.: E05B 77/08, E05B 83/24, B60R 21/34, E05B 15/04

(54) **SICHERHEITSVORRICHTUNG FÜR EIN KRAFTFAHRZEUG MIT EINER DREHFALLE UND EINER SCHUTZLAGE**
SAFETY DEVICE FOR A MOTOR VEHICLE HAVING A ROTARY LATCH AND A PROTECTIVE POSITION
DISPOSITIF DE SÉCURITÉ POUR UN VÉHICULE À MOTEUR COMPORTANT UN PÊNE PIVOTANT ET UNE POSITION DE PROTECTION

(30) Priorität: 22.12.2015 DE 102015122579
(43) Veröffentlichungstag der Anmeldung: 31.10.2018
(73) Patentinhaber: Kiekert AG, 42579 Heiligenhaus (DE)
(72) Erfinder: INAN, Ömer, 46282 Dorsten (DE); SCHIFFER, Holger, 40668 Meerbusch (DE); SCHOLZ, Michael, 45136 Essen (DE); SCHÖNENBERG, Thomas, 51399 Burscheid (DE)
(86) Internationale Anmeldenummer: PCT/DE2016/100556
(87) Internationale Veröffentlichungsnummer: WO 2017/108023

(56) Entgegenhaltungen:
- EP-A2- 2 341 204
- WO-A1-2015/077549
- DE-A1-102006 026 282
- DE-A1-102010 061 518
- KR-A- 20150 106 290

## Beschreibung

Die Erfindung betrifft eine Sicherheitsvorrichtung gemäß dem Oberbegriff des Anspruchs 1 für ein Kraftfahrzeug, welche einen Schlosshalter, eine Sperrklinke und eine Drehfalle mit einer Öffnungsdrehrichtung, einer Schließdrehrichtung und einer Hauptraststellung aufweist.

Eine Sicherheitsvorrichtung für ein Kraftfahrzeug, welche einen Schlosshalter, eine Sperrklinke und eine Drehfalle mit einer Öffnungsdrehrichtung, einer Schließdrehrichtung und einer Hauptraststellung aufweist, ist aus der EP 2 096 007 B1 in Form einer Fußgängerschutzeinrichtung bekannt. Die Fußgängerschutzeinrichtung hat einen Sensor, der einen Zusammenstoß eines Objekts mit dem Kraftfahrzeug erfassen kann und dann ein Signal an eine Einrichtung weiterleitet, die den hinteren oder vorderen Bereich der Fronthaube nach oben in eine Schutzlage ausstellt, in der die Fronthaube in vertikaler Richtung nach unten elastisch oder gedämpft abgestützt ist. Eine Fußgängerschutzeinrichtung, bei welcher eine Fronthaube nach oben in eine Schutzlage ausgestellt wird, ist ebenfalls aus der DE 10 2005 035 006 A1 bekannt. Die darin beschriebene Fußgängerschutzeinrichtung weist Schlossteile auf, die bei dem Hochstellen der Fronthaube in die Schutzlage die Fronthaube an dem schwenkbaren Schlossträger fixieren. Mit dieser Vorrichtung soll eine Dämpfung oder gar Verhinderung eines Rückschwingens der Fronthaube nach Durchführung des Aufstellvorgangs vor einem Aufprall eines Fußgängers auf die Fronthaube ermöglicht sein.

Die EP 1 818 224 A1 beschreibt eine Fußgängerschutzeinrichtung, bei welcher die Fronthaube vor einem Aufprall eines Fußgängers von einem Aktuator in eine erhöhte Schutzlage hochgestellt wird. Um oszillierende Bewegungen der Fronthaube beim Hochstellen in die Schutzlage zu vermeiden, ist bei einer Ausführung in einem Langloch ein elastisches Element angeordnet, das von einem Zapfen komprimiert wird und dabei energievernichtend wirken soll.

Allen oben beschriebenen Fußgängerschutzeinrichtungen ist gemeinsam, dass eine Fronthaube zum Erreichen einer Schutzlage hochgestellt wird. Zum einen kann dies mit einem Zeitverzug einhergehen, innerhalb welchem die Fronthaube die Schutzlage erreicht, und zum anderen ergibt sich ein sicherheitsgefährdendes Nachschwingen, wenn die Fronthaube sehr schnell in die Schutzlage hochgestellt wird. Beides beeinträchtigt eine Sicherheit einer Person bei einem Aufprall auf die Fronthaube.

DE 10 2006 026 282 A1 bildet die Basis für den Oberbegriff des Anspruchs 1 und beschreibt einen Drehfallenverschluss mit einer in einer Verriegelungsstellung ein Gegenschließteil 4 fesselnden, von einer Sperrklinke 2 gehaltenen Drehfalle 1. Die Drehfalle 1 ist nach Verschwenken der Sperrklinke 2 aus einer Sperrstellung in eine Offenstellung und durch Kraftausübung auf das Gegenschließteil 4 über die Verriegelungsstellung hinaus in eine Ausweichstellung bringbar. Die Drehfalle 1 verschwenkt bei ihrer Verlagerung von der Offenstellung in die Verriegelungsstellung die Sperrklinke 2 derart, dass ein Begrenzungsfortsatz 5 in die Bewegungsbahn einer Anschlagschulter 6 der Drehfalle 1 gesteuert wird. Der Begrenzungsfortsatz 5 tritt anschließend wieder aus der Bewegungsbahn heraus, um das Verschwenken der Drehfalle 1 in die Ausweichstellung zu ermöglichen. Der Begrenzungsfortsatz 5 wird von der Sperrklinke 2 in die Bewegungsbahn mitgeschleppt und nach Einschwenken der Sperrklinke 2 in die Sperrstellung verzögert zurückverlagert. Der Begrenzungsfortsatz 5 ist einem Begrenzungsarm 3 zugeordnet. Der Begrenzungsarm 3 ist um eine gehäusefeste Achse 7 schwenkbar. Der Drehfallenverschluss weist eine sich beim Mitschleppen des Begrenzungsarmes 3 spannende Begrenzungsarmfeder F3 auf. Die Drehfalle 1 hat eine Steuerschulter 20, welche beim Verlagern der Drehfalle 1 von der Offenstellung in die Verriegelungsstellung eine Steuerflanke 21 der Sperrklinke 2 beaufschlagt, wobei im Zuge dieser Beaufschlagung die Sperrklinke 2 gegen die Rückstellkraft einer Feder F2 gedreht wird und den Begrenzungsarm 3 mitschleppt, wobei die Begrenzungsarmfeder F3 gespannt wird. Bei diesem bekannten Drehfallenverschluss beaufschlagt die Feder F2 die Sperrklinke 2 in eine Sperrdrehrichtung und beaufschlagt die Begrenzungsarmfeder F3 den Begrenzungsarm 3 ebenfalls in diese Sperrdrehrichtung.

WO 2015 077 549 A1 beschreibt ein Schloss 12 für die Motorhaube 18 eines Kraftfahrzeugs 10. Dieses Schloss 12 weist einen Schlosshalter (striker 26), eine Sperrklinke (pawl 24) mit einer Sperrdrehrichtung, eine Drehfalle (ratchet 22) mit einer Öffnungsdrehrichtung, einer Schließdrehrichtung und einer Hauptraststellung, ein Blockierelement (block lever 27) mit einer Blockadestellung und einer Freigabestellung und eine Sperrklinkenfeder (pawl sping 25) auf. Die Sperrklinkenfeder 25 beaufschlagt die Sperrklinke 24 in der Sperrdrehrichtung. In der Blockadestellung des Blockierelementes 27 ist die Drehfalle 22 in Schließdrehrichtung blockiert. In der Freigabestellung des Blockierelementes 27 ist die Drehfalle 22 von dem Blockierelement 27 in Schließdrehrichtung freigegeben und in der Hauptraststellung der Drehfalle 22 ein Absenken des Schlosshalters 26 ermöglicht. Eine Bewegung des Blockierelementes 27 von der Freigabestellung in die Blockadestellung ist mittels der Sperrklinke 24 gesteuert, indem eine Nase der Sperrklinke 24 an dem Blockierelement 27 anliegt. Bei diesem bekannten Schloss 12 gelangt das Blockierelement 27 aus seiner Blockadestellung in seine Freigabestellung durch eine Drehung entgegen der Sperrdrehrichtung.

KR 10 2015 106 290 A beschreibt ein Schloss 1 für die Motorhaube eines Kraftfahrzeugs. Dieses Schloss 1 weist einen Schlosshalter 80, eine Sperrklinke 31 mit einer Sperrdrehrichtung, eine Drehfalle 21 mit einer Öffnungsdrehrichtung, einer Schließdrehrichtung und einer Hauptraststellung, ein Blockierelement 42 mit einer Blockadestellung und einer Freigabestellung und eine Sperrklinkenfeder 38 auf. Die Sperrklinkenfeder 38 beaufschlagt die Sperrklinke 31 in der Sperrdrehrichtung. In der Blockadestellung des Blockierelementes 42 ist die Drehfalle 21 in Schließdrehrichtung blockiert. In der Freigabestellung des Blockierelementes 42 ist die Drehfalle 21 von dem Blockierelement 42 in Schließdrehrichtung freigegeben und in der Hauptraststellung der Drehfalle 21 ein Absenken des Schlosshalters 80 ermöglicht. Eine Bewegung des Blockierelementes 42 von der Freigabestellung in die Blockadestellung ist mittels der Sperrklinke 31 gesteuert, indem eine Stange 46 mit ihrem einem Ende an der Sperrklinke 31 und mit ihrem anderen Ende an dem Blockierelement 42 schwenkbar gelagert ist. Bei diesem bekannten Schloss 1 gelangt das Blockierelement 42 aus seiner Blockadestellung in seine Freigabestellung durch eine Drehung entgegen der Sperrdrehrichtung.

Aufgabe der vorliegenden Erfindung ist es, eine Sicherheitsvorrichtung für ein Kraftfahrzeug bereitzustellen, bei der die Sicherheit einer Person bei einem Aufprall auf eine Fronthaube eines Kraftfahrzeugs erhöht ist.

Diese Aufgabe wird erfindungsgemäß durch die Gegenstände der unabhängigen Ansprüche gelöst. Vorteilhafte Ausgestaltungen mit zweckmäßigen Weiterbildungen der Erfindung ergeben sich aus den übrigen Patentansprüchen, der Beschreibung und den Figuren. Insbesondere können auch ein oder mehrere Merkmale aus den abhängigen Ansprüchen durch ein oder mehrere Merkmale aus der Beschreibung ergänzt und/oder ersetzt werden. Auch können ein oder mehrere Merkmale aus jeweils verschiedenen Ausgestaltungen der Erfindung zu weiteren Ausbildungen der Erfindung verknüpft werden.

Die Erfindung schlägt gemäß einen ersten Aspekt eine Sicherheitsvorrichtung für ein Kraftfahrzeug vor, welche einen Schlosshalter, eine Sperrklinke mit einer Sperrdrehrichtung und eine Drehfalle aufweist. Die Drehfalle hat eine Öffnungsdrehrichtung, eine Schließdrehrichtung und eine Hauptraststellung. Weiterhin hat die Sicherheitsvorrichtung ein Blockierelement mit einer Blockadestellung und einer Freigabestellung. Außerdem hat die Sicherheitsvorrichtung eine Sperrklinkenfeder, welche die Sperrklinke in der Sperrdrehrichtung beaufschlagt, und ein Blockierfederelement, das an dem Blockierelement angreift. In der Blockadestellung des Blockierelementes ist die Drehfalle in Schließdrehrichtung blockiert. In der Freigabestellung des Blockierelementes ist die Drehfalle von dem Blockierelement in Schließdrehrichtung freigegeben und in der Hauptraststellung der Drehfalle ein Absenken des Schlosshalters ermöglicht. Eine Bewegung des Blockierelementes von der Freigabestellung in die Blockadestellung ist mittels der Sperrklinke gesteuert. Das Blockierfederelement bewirkt in der Blockadestellung des Blockierelementes eine Verzögerung einer Drehung des Blockierelementes in Sperrdrehrichtung.

Das Blockierfederelement kann beispielsweise eine Blockierelementdrehfeder sein oder als elastischer Hebel zwischen dem Anschlag und der Drehachse des Blockierelementes ausgebildet sein. In letzterer Ausgestaltung ist der elastische Hebel und der Anschlag jeweils ein Teil des Blockierelementes. Im Rahmen einer besonders bevorzugten Variante treibt die Sperrklinke das Blockierelement mittelbar über das Blockierfederelement an.

Die Verzögerung der Drehung des Blockierelementes in Sperrdrehrichtung bewirkt insbesondere eine Verzögerung gegenüber einer Drehung der Sperrklinke in die Sperrdrehrichtung hin zur Sperrstellung, wobei die Drehfalle mittels des Blockierelementes in Schließdrehrichtung blockiert ist.

Vorzugsweise weist die Sicherheitsvorrichtung eine Fronthaube auf, an welcher der Schlosshalter in einem eingebauten Zustand der Sicherheitsvorrichtung befestigt ist.

Die Drehfalle weist einen Lastarm und einen Fangarm auf, wobei der Fangarm und der Lastarm ein gabelförmiges Einlaufmaul der Drehfalle ausbilden, welches den Schlosshalter bei einem Schließvorgang der Drehfalle aufnimmt. Der Fangarm und der Lastarm haben jeweils einen Kopfbereich, wobei die beiden Kopfbereiche in vorteilhafter Weise die am weitesten von einer Drehachse der Drehfalle entfernten Bereiche der Drehfalle sind. Die beiden Kopfbereiche bilden eine Öffnung des Einlaufmauls aus, in welche der Schlosshalter beim Schließvorgang der Drehfalle eintritt. Die Kopfbereiche können sich bevorzugt bis zu einem fünftel einer Länge des Fangarmes beziehungsweise des Lastarmes von dem jeweiligen Ende des Fangarmes beziehungsweise des Lastarmes bis hin zur Drehachse der Drehfalle erstrecken.

Der Lastarm und der Fangarm sind bevorzugt zumindest teilweise bogenförmig ausgebildet, um ein Führen des Schlosshalter innerhalb des Einlaufmauls bei einer Schließbewegung der Drehfalle zu ermöglichen.

Die Drehfalle weist eine Hauptrast auf, wobei in der Hauptraststellung die Sperrklinke die Hauptrast umgreift und die Drehfalle in die Öffnungsdrehrichtung blockiert. Eine Auswurffeder der Sicherheitsvorrichtung beaufschlagt die Drehfalle in Öffnungsdrehrichtung und drückt in der Hauptraststellung die Hauptrast gegen die Sperrklinke. Die Auswurffeder ist vorteilhaft als Schenkelfeder ausgeführt, die um ihre Drehachse auf Biegung beansprucht ist.

Die Sicherheitsvorrichtung nimmt in der Hauptraststellung der Drehfalle eine Verriegelungsstellung ein, wobei der Schlosshalter und insbesondere die Fronthaube geschlossen und verriegelt ist. In einer Offenstellung der Drehfalle ist der Schlosshalter beziehungsweise die an dem Schlosshalter angeordnete Fronthaube von der Drehfalle freigegeben. Die Öffnungsdrehrichtung der Drehfalle ist die Richtung, in welche sich die Drehfalle von der Hauptraststellung hin zur Offenstellung dreht. Die Schließdrehrichtung ist die zur Öffnungsdrehrichtung entgegengesetzte Drehrichtung.

In der Hauptraststellung der Drehfalle ist der Schlosshalter beziehungsweise die Fronthaube absenkbar, wobei in der Hauptraststellung der Drehfalle die Sicherheitsvorrichtung eine Schutzlage bereitstellt, in welcher ein Aufprall einer Person auf die Fronthaube dämpfend abgefangen werden kann. Die Drehfalle dreht sich bei einem Abfangen des Aufpralls der Person in die Schließdrehrichtung hin zu einer Aufprallabfangstellung, in welcher die Sicherheitsvorrichtung ebenfalls eine Aufprallabfangstellung einnimmt. Der Vorteil der vorgeschlagenen Sicherheitsvorrichtung ist es, dass die Sicherheitsvorrichtung die Schutzlage in der Verriegelungsstellung bereitstellt. Dadurch kann auf einen Auslösemechanismus zum Bewegen der Sicherheitsvorrichtung in die Schutzlage, beispielsweise einen Aktuator zum Anheben der Fronthaube, verzichtet werden, wodurch ein Zeitverzug, innerhalb welchem die Fronthaube die Schutzlage erreicht, erheblich reduziert wird oder sogar auf bis zu Null Sekunden reduzierbar ist. Durch eine Verringerung dieses Zeitverzuges kann bei der vorgeschlagenen Sicherheitsvorrichtung die Sicherheit einer Person bei einem Aufprall auf die Fronthaube des Kraftfahrzeugs erhöht werden. Weiterhin kann ein Nachschwingen der Fronthaube vermieden werden, da die Fronthaube nicht von einer normalen Lage in der Verriegelungsstellung der Sicherheitsvorrichtung in eine hochgestellte Lage in Form einer Schutzlage der Sicherheitsvorrichtung überführt werden muss.

Die Bewegung des Blockierelementes von der Freigabestellung in die Blockadestellung ist mittels der Sperrklinke gesteuert. Gesteuert meint, dass eine Bewegung der Sperrklinke die Bewegung des Blockierelementes von der Freigabestellung in die Blockadestellung bewirkt. Dies kann beispielsweise dadurch ermöglicht werden, dass die Sperrklinke bei einer Bewegung das, bevorzugt in Richtung der Blockadestellung vorgespannte, Blockierelement freigibt.

In einer davon verschiedenen Ausführungsform ist das Blockierelement mittels der Sperrklinke angetrieben. Bevorzugt ist das Blockierelement indirekt mittels der Drehfalle und bevorzugt direkt mittels der Sperrklinke angetrieben. Eine derartige Ausführungsform soll im Folgenden beschrieben werden. In dieser bevorzugten Ausführungsform hat die Sperrklinke eine Sperrstellung, in welcher die Sperrklinke ein Passieren der Hauptrast der Drehfalle in Öffnungsdrehrichtung verhindert, und eine Passierstellung, in welcher die Hauptrast an der Sperrklinke passieren kann.

Vorteilhafterweise weist die Sicherheitsvorrichtung eine Sperrklinkenfeder auf, welche die Sperrklinke in eine Sperrdrehrichtung, d.h. in Richtung der Sperrstellung, beaufschlagt. Befindet sich die Drehfalle in der Offenstellung und wird von der Offenstellung in Schließdrehrichtung gedreht, beispielsweise durch ein Niederdrücken der Fronthaube beziehungsweise des Schlosshalters, stößt die Drehfalle bevorzugt an einer Rastnase der Sperrklinke an und dreht die Sperrklinke ausgehend von der Sperrstellung in Richtung der Passierstellung. Bevorzugt ist das Blockierelement derart mit der Sperrklinke mechanisch verbunden, dass bei der Drehung der Sperrklinke von der Sperrstellung in Richtung der Passierstellung die Sperrklinke das Blockierelement von der Freigabestellung in die Blockadestellung bewegt. Besonders vorteilhaft sind das Blockierelement und die Sperrklinke um eine gemeinsame Drehachse drehbar gelagert. Dies kann eine kompaktere Bauweise der Sicherheitsvorrichtung und eine damit einhergehende Einsparung einer zusätzlichen Drehachse für das Blockierelement und damit eine Gewichtseinsparung ermöglichen. Weiterhin kann vorgesehen sein, dass das Blockierelement unmittelbar mit der Sperrklinke verbunden ist oder als ein Ausleger der Sperrklinke ausgebildet ist.

Das Blockierelement hat bevorzugt einen Anschlag, an welchem die Drehfalle bei einer Drehung in Schließdrehrichtung in der Blockadestellung des Blockierelementes anschlägt, wobei sich die Drehfalle in Schließdrehrichtung gesehen bevorzugt hinter der Hauptraststellung befindet. In der Blockadestellung des Blockierelementes verhindert das Blockierelement eine Drehung der Drehfalle in Schließdrehrichtung über den Anschlag hinaus und damit ein Durchschlagen der Drehfalle beziehungsweise der Fronthaube, wobei die Sicherheitsvorrichtung eine Durchschlagschutzstellung einnimmt.

Ein in der Durchschlagschutzstellung bereitgestellter Durchschlagschutz ist insbesondere bei einem Schließen der Fronthaube vorteilhaft, bei welchem die Bewegung der Fronthaube abgebremst wird. Besonders vorteilhaft ist der Durchschlagschutz in der Blockadestellung bereitgestellt und in der Freigabestellung des Blockierelementes aufgehoben. In der Freigabestellung des Blockierelementes ist der Schlosshalter beziehungsweise die Fronthaube ausgehend von der Schutzlage der Sicherheitsvorrichtung um ungefähr 15 mm absenkbar, was ein Abfangen eines Aufpralls eines Fußgängers auf die Fronthaube ermöglicht.

Eine vorteilhafte Ausgestaltung sieht vor, dass in einer Position der Drehfalle, in welcher die Drehfalle von der Hauptraststellung aus in der Öffnungsdrehrichtung gedreht ist, das Blockierelement die Blockadestellung einnimmt, und in der Hauptraststellung der Drehfalle das Blockierelement die Freigabestellung einnimmt.

Dies kann besonders vorteilhaft dadurch ermöglicht sein, dass die Sicherheitsvorrichtung das Blockierfederelement aufweist, wobei das Blockierfederelement in der Blockadestellung die Verzögerung der Drehung des Blockierelementes in Sperrdrehrichtung bewirkt.

Um die erfindungsgemäße Verzögerung im Detail zu realisieren, weist die Sicherheitsvorrichtung besonders vorteilhaft ein aufeinander abgestimmtes Trägheitssystem auf, wobei das Blockierfederelement, ein Massenträgheitsmoment des Blockierelementes um die Drehachse des Blockierelementes, ein Massenträgheitsmoment der Sperrklinke um die Drehachse der Sperrklinke und die Sperrklinkenfeder derart aufeinander abgestimmt sind, dass die Sperrklinke ausgehend von der Passierstellung eine höhere Drehbeschleunigung als das Blockierelement aufweist.

Besonders vorteilhaft weist die Sicherheitsvorrichtung zusätzlich zu der Auswurffeder ein Dämpfungselement auf, welches eine Drehung der Drehfalle ausgehend von der Hauptraststellung in die Schließdrehrichtung dämpft und ein Einfedern und ein Absenken des Schlosshalters beziehungsweise der Fronthaube ausgehend von der Hauptraststellung der Drehfalle unterstützt. Die Sicherheitsvorrichtung sieht bevorzugt einen Drehwinkelsektor vor, in welchen die Drehfalle in Schließdrehrichtung über die Hauptraststellung hinaus drehbar ist, wobei mit einer Drehung der Drehfalle in den Drehwinkelsektor hinein ein Absenken des Schlosshalters beziehungsweise der Fronthaube einhergeht.

Eine vorteilhafte Ausgestaltung sieht vor, dass die Drehfalle eine Vorraststellung hat. Bevorzug ist an dem Fangarm eine Vorrast ausgebildet, wobei die Sperrklinke die Vorrast in der Vorraststellung umgreift und die Drehfalle in die Öffnungsdrehrichtung blockiert. In der Vorraststellung der Drehfalle sichert die Sicherheitsvorrichtung die Drehfalle gegen eine Drehung in die Öffnungsdrehrichtung, wobei der Schlosshalter, welcher von einem Einlaufmaul der Drehfalle umgriffen ist, in die Öffnungsrichtung blockiert ist. Dies hat zur Folge, dass die Fronthaube in Öffnungsrichtung blockiert ist. Eine derartige Sicherung der Fronthaube in der Vorraststellung kann ein unbeabsichtigtes Öffnen der Fronthaube verhindern, wenn die Drehfalle versehentlich aus der Hauptraststellung gelöst wurde.

Eine besonders vorteilhafte Ausgestaltung der Erfindung sieht vor, dass der Kopfbereich des Fangarmes eine Abkröpfung mit einer Einrastfläche als Vorrast in Richtung der Öffnungsdrehrichtung aufweist. An dieser Einrastfläche liegt die Rastnase der Sperrklinke in der Vorraststellung der Drehfalle an und umgreift die Abkröpfung des Fangarmes, wobei die Sperrklinke mittels einer Sperrklinkenfeder der Sicherheitsvorrichtung in eine Sperrdrehrichtung beaufschlagt ist und eine Sperrstellung einnimmt. Außerdem und vor allem in Kombination dieser Ausgestaltung kann eine weitere Ausgestaltung vorsehen, dass der Kopfbereich des Lastarmes eine Abkröpfung mit einer Einrastfläche als Hauptrast in Richtung der Öffnungsdrehrichtung aufweist. In der Hauptraststellung der Drehfalle liegt die Rastnase der Sperrklinke an dieser Einrastfläche an, wobei die Rastnase die Abkröpfung des Lastarmes umgreift und die Sperrklinke die Sperrstellung einnimmt.

Insbesondere die Kombination dieser beiden Ausgestaltungen ermöglicht, dass die Sperrklinke unmittelbar im Bereich der Öffnung des Einlaufmauls sowohl in der Vorraststellung als auch in der Hauptraststellung der Drehfalle die Drehfalle gegen eine Drehung in die Öffnungsdrehrichtung sichert.

Dadurch, dass die jeweiligen Kopfbereiche des Fangarmes und des Lastarmes die am weitesten von einer Drehachse der Drehfalle entfernten Bereiche der Drehfalle darstellen und die Sperrklinke an der Abkröpfung des Fangarmes beziehungsweise an der Abkröpfung des Lastarmes eingerastet ist, ist eine größtmögliche Drehmomentwirkung der Sperrklinke entgegen einem Öffnungsdrehmoment in der Vorraststellung beziehungsweise in der Hauptraststellung vorgesehen.

Im Vergleich zu Sicherheitsvorrichtungen, bei welchen die Sperrklinke nicht unmittelbar im Bereich einer Öffnung des Einlaufmauls sowohl in der Vorraststellung als auch in der Hauptraststellung der Drehfalle einrastbar ist, hat dies den Vorteil, dass sich die Drehfalle nicht in von der Öffnung des Einlaufmauls entfernte Bereiche erstrecken muss, um jeweils eine Einrastfläche zu der Rastnase der Sperrklinke auszubilden. Beispielsweise kann eine Außenkontur des Fangarmes im Wesentlichen parallel zu einer Innenkontur des Einlaufmauls verlaufen. Dies reduziert das Gewicht der Drehfalle und somit das Gesamtgewicht der Sicherheitsvorrichtung, wobei ein Verbrauch eines Kraftfahrzeuges, in welchem die Sicherheitsvorrichtung eingebaut sein kann, reduziert werden kann. Ein geringeres Gewicht der Drehfalle kann auch ein Massenträgheitsmoment der Drehfalle um die Drehachse der Drehfalle reduzieren, was mit einer geringeren Trägheit der Sicherheitsvorrichtung einhergeht. Die geringere Trägheit der Sicherheitsvorrichtung hat den Vorteil, dass bei einem Aufprall einer Person auf die Fronthaube der Schlosshalter schneller absenkbar ist als bei einer Sicherheitsvorrichtung mit einem vergleichsweise höheren Massenträgheitsmoment der Drehfalle. Dies kann insbesondere einen HIC-Wert, d.h. einen normierten Integralwert einer Kopfbeschleunigung einer Person, beim Aufprall reduzieren. Somit kann durch diese spezielle Ausgestaltung die Sicherheit der Sicherheitsvorrichtung noch weiter erhöht werden.

Die Sperrklinkenfeder und die Auswurffeder weisen jeweils eine Federsteifigkeit auf, wobei in einer besonders vorteilhaften Ausgestaltung die Federsteifigkeit der Sperrklinkenfeder derart an die Federsteifigkeit der Auswurffeder angepasst ist, dass bei einem Entsichern der Drehfalle aus der Hauptraststellung ein Einrasten der Drehfalle in die Vorraststellung sichergestellt ist. Besonders bevorzugt ist die Federsteifigkeit der Sperrklinkenfeder an die Federsteifigkeit der Auswurffeder, das Massenträgheitsmoment der Sperrklinke um die Drehachse der Sperrklinke, das Massenträgheitsmoment der Drehfalle um die Drehachse der Drehfalle und an eine über den Schlosshalter auf die Drehfalle wirkende Gewichtskraft der Fronthaube derart angepasst, dass bei einem Entsichern der Drehfalle aus der Hauptraststellung die Sperrklinke eine höhere Drehbeschleunigung erfährt als die Drehfalle und ein Einrasten der Drehfalle in die Vorraststellung sichergestellt ist. Eine derartige Anpassung der Federsteifigkeit der Sperrklinkenfeder ermöglicht, dass die Sperrklinke die Sperrstellung nach einem Entsichern der Drehfalle aus der Hauptraststellung schneller erreicht als die Drehfalle die Vorraststellung, sodass bei einem Entsichern der Drehfalle aus der Hauptraststellung ein Einrasten in die Vorraststellung sichergestellt ist.

Im Rahmen einer weiteren Ausgestaltung oder in Kombination mit vorheriger Ausgestaltung ist vorgesehen, dass die Sicherheitsvorrichtung einen Verzögerungsmechanismus zum Verzögern der Drehfalle aufweist. Der Verzögerungsmechanismus stellt bei einer Drehung der Drehfalle in Öffnungsdrehrichtung ausgehend von der Hauptraststellung ein Verrasten der Drehfalle in der Vorraststellung sicher. Beispielsweise kann der Verzögerungsmechanismus in Form einer Reibfläche ausgeführt sein, welche die Drehfalle vor einem Erreichen der Vorraststellung abbremst. In dieser Ausgestaltung steht ein längerer Zeitraum zur Verfügung, innerhalb welcher die Sperrklinke die Sperrstellung erreichen kann, bevor die Drehfalle die Vorraststellung einnimmt. Der Vorteil dieser Ausführungsform ist, dass auf eine Anpassung der Federsteifigkeit der Sperrklinkenfeder an die Federsteifigkeit der Auswurffeder verzichtet werden kann und trotzdem bei einer Drehung der Drehfalle in Öffnungsdrehrichtung ausgehend von der Hauptraststellung ein Verrasten der Drehfalle in der Vorraststellung sicher gestellt werden kann. Somit kann insbesondere eine Sperrklinkenfeder geringer dimensioniert werden, was zusätzlich das Gesamtgewicht der Sicherheitsvorrichtung reduziert.

Im Rahmen einer bevorzugten Variante weist der Verzögerungsmechanismus eine Anschlagfläche zum Stoppen der Drehfalle auf. Die Anschlagfläche kann beispielsweise an einem Ausleger der Sperrklinke angeordnet sein und mit der Abkröpfung des Fangarmes zusammenwirken. Genauso kann die Anschlagfläche an dem Fangarm, bevorzugt an der Abkröpfung des Fangarmes, angeordnet sein und mit dem Ausleger der Sperrklinke zusammenwirken. Entscheidend bei dieser Ausführungsform ist, dass in der Freigabestellung der Sperrklinke eine Bahnkurve eines von der Drehachse der Drehfalle am weitesten beabstandeten Punktes des Fangarmes den Ausleger schneidet, d.h. der Ausleger den Fangarm bei einer Drehung der Drehfalle von der Hauptraststellung hin zur Vorraststellung in einer Stellung zwischen der Hauptraststellung und der Vorraststellung der Drehfalle blockiert. Befindet sich die Drehfalle in dieser Stellung, ist eine durch die Sperrklinkenfeder angetriebene Bewegung der Sperrklinke von der Freigabestellung hin bis zum Erreichen der Sperrstellung ermöglicht, bevor der Fangarm die Rastnase der Sperrklinke passieren kann.

Eine vorteilhafte Weiterbildung sieht vor, dass die Auswurffeder als Spiralfeder ausgebildet ist. Dies kann insbesondere eine schmalere Bauform der Sicherheitsvorrichtung gegenüber einer Sicherheitsvorrichtung, bei welcher die Auswurffeder als Schenkelfeder ausgeführt ist, ermöglichen. Die Ausgestaltung der Auswurffeder als Spiralfeder kann insbesondere eine gemeinsame Lagerung der Drehfalle und der Auswurffeder an einer gemeinsamen Drehachse vereinfachen, wobei diese gemeinsame Lagerung eine weitere mögliche Ausführungsform der Sicherheitsvorrichtung darstellt. Hierbei ist insbesondere die schmalere Bauweise der Auswurffeder als Spiralfeder gegenüber einer Schenkelfeder vorteilhaft, weil Lager einer Lagerpaarung für die gemeinsame Drehachse näher aneinander angeordnet werden können und dadurch die Drehachse kürzer ausgebildet sein kann und eine höhere Traglast der Drehachse ermöglicht ist, um mehr als ein Bauteil zu lagern.

In besonders vorteilhafter Ausgestaltung ist vorgesehen, dass die Auswurffeder zum Auswerfen des Schlosshalters einen Schenkel aufweist und der Schenkel in der Hauptraststellung der Drehfalle an dem Schlosshalter anliegt und in einer Zwischenstellung der Drehfalle, in welcher sich die Drehfalle zwischen der Hauptraststellung und der Offenstellung befindet, der Schenkel die Drehfalle unmittelbar in die Öffnungsdrehrichtung beaufschlagt.

Ein Auswerfen des Schlosshalters meint, dass der Schlosshalter derart bewegt wird, dass nach dem Auswerfen der Schlosshalter von der Drehfalle freigegeben ist, wobei sich die Drehfalle in der Offenstellung befindet. In einer Ausführungsform unterstützt die Auswurffeder das Auswerfen des Schlosshalters zumindest teilweise, bevorzugt zu Beginn des Auswerfens des Schlosshalters. Besonders vorteilhaft treibt die Auswurffeder die Drehfalle zuerst indirekt über den Schlosshalter und anschließend unmittelbar in die Öffnungsdrehrichtung über einen an der Drehfalle angeordneten Mitnehmer während des Auswerfens des Schlosshalters an. Der Mitnehmer ist vorzugsweise einstückig mit der Drehfalle und beispielsweise als Pin oder Dorn ausgebildet.

In einer besonderen Ausgestaltung liegt der Schenkel in der Hauptraststellung der Drehfalle unmittelbar an dem Schlosshalter an. Unmittelbar meint insbesondere, dass kein weiteres Bauteil zwischen dem Schenkel und dem Schlosshalter vorgesehen ist. Bevorzugt liegt ein Hauptfedermaterial der Auswurffeder, welches der Auswurffeder eine Federsteifigkeit verleiht, in der Hauptraststellung der Drehfalle unmittelbar an dem Schlosshalter an. Der Schenkel erstreckt sich bevorzugt zumindest bis zu einem Radius von 3 bis 5 cm, ausgehend von der Drehachse der Auswurffeder.

In der Zwischenstellung der Drehfalle ist die Drehfalle ausgehend von der Hauptraststellung in die Öffnungsdrehrichtung gedreht, bevorzugt zumindest um fünfzig bis sechzig Grad gedreht. In vorteilhafter Weise beaufschlagt der Schenkel die Drehfalle in Öffnungsdrehrichtung in mehreren Zwischenstellungen der Drehfalle, wobei jeweilige Positionen des Schenkels in den Zwischenstellungen der Drehfalle einen Kreissektor ausbilden, welcher sich ausgehend von einer Position des Schenkels in der Hauptraststellung der Drehfalle in Öffnungsdrehrichtung befindet.

Die Auswurffeder beaufschlagt die Drehfalle in der Zwischenstellung unmittelbar und in der Hauptraststellung mittelbar über den Schlosshalter in die Öffnungsdrehrichtung, wobei bevorzugt in jeder Position des Schenkels bei einer Bewegung der Drehfalle von der Hauptraststellung hin zur Offenstellung ein Kontakt zwischen dem Schlosshalter und dem Einlaufmaul der Drehfalle besteht. Dies kann vorteilhaft eine Geräuschemission der Sicherheitsvorrichtung im Vergleich zu einer Sicherheitsvorrichtung, bei welcher ein permanenter Kontakt zwischen dem Schlosshalter und dem Einlaufmaul nicht gewährleistet ist, reduzieren.

Weiterhin kann durch die vorgeschlagene Sicherheitsvorrichtung mit dem Schenkel der Auswurffeder auf eine zusätzliche Drehfallenfeder zum Antreiben der Drehfalle verzichtet werden, wodurch zum einen ein erforderlicher Bauraum für die Sicherheitsvorrichtung und zum anderen das Gesamtgewicht der Sicherheitsvorrichtung verringert wird.

In einer Weiterbildung kann vorgesehen sein, dass der Schenkel bei einer Drehung der Drehfalle in Öffnungsdrehrichtung wechselnd an dem Schlosshalter und an der Drehfalle anliegt. Wechselnd meint, dass der Schenkel zumindest in einer ersten Position der Drehfalle an dem Schlosshalter anliegt und ein Kontakt zwischen dem Schenkel und der Drehfalle aufgehoben ist und in einer zweiten Position der Drehfalle, in welcher die Drehfalle von der ersten Position aus in Öffnungsdrehrichtung gedreht ist, der Schenkel an dem Mitnehmer der Drehfalle anliegt und ein Kontakt zwischen dem Schlosshalter und dem Schenkel aufgehoben ist. Mittels eines solchen Anlagewechsels des Schenkels kann ermöglicht werden, dass bei einer Drehung der Drehfalle in Öffnungsdrehrichtung, bevorzugt ausgehend von der Hauptraststellung, über die Vorraststellung hin zur Offenstellung, der Schenkel im Vergleich zu einer Ausführungsform, bei welcher kein Anlagewechsel des Schenkels vorgesehen ist, einen größeren Kreissektor überstreichen kann.

Je größer der überstrichene Kreissektor des Schenkels ist, desto höher ist die von der Auswurffeder abgegebene Arbeit während einer Drehung der Drehfalle in Öffnungsdrehrichtung. Je höher die von der Auswurffeder abgegebene Arbeit bei einem konstanten Gesamthub des Schlosshalters beim Auswerfen ist, desto größer ist ein von der Auswurffeder unmittelbar oder mittelbar übertragene Kraftstoß auf den Schlosshalter beim Auswerfen. Somit kann eine Sicherheitsvorrichtung, welche eine wechselnd an dem Schlosshalter und an der Drehfalle anliegende Auswurffeder vorsieht, mit einer geringer dimensionierten Auswurffeder ausgerüstet werden, wodurch der Bauraum und das Gewicht der Sicherheitsvorrichtung reduziert werden kann.

Nach einer vorteilhaften Ausgestaltung ist der Schenkel derart ausgebildet, dass bei einem Anlagewechsel des Schenkels von dem Schlosshalter zur Drehfalle ein Kraftschluss zwischen dem Schenkel und dem Schlosshalter realisiert ist.

Um dies im Detail zu ermöglichen kann der Schenkel eine Krümmung aufweisen, wodurch eine Relativgeschwindigkeit zwischen dem Schlosshalter und dem Schenkel bei einer Drehung des Schenkels reduziert wird. Eine derart reduzierte Relativgeschwindigkeit zwischen dem Schlosshalter und dem Schenkel kann eine Dauer des Anlagewechsels des Schenkels von dem Schlosshalter zur Drehfalle erhöhen, wodurch der Kraftschluss zwischen dem Schenkel und dem Schlosshalter während des Anlagewechsels sichergestellt ist.

Der Kraftschluss zwischen dem Schenkel und dem Schlosshalter erfolgt beim Anlagewechsel zum einen unmittelbar durch einen direkten Kontakt zwischen dem Schenkel und dem Schlosshalter und zum anderen mittelbar ausgehend von einem direkten Kontakt zwischen dem Schenkel und der Drehfalle bzw. dem Mitnehmer der Drehfalle über einen unmittelbaren Kontakt des Schlosshalters mit dem Einlaufmaul der Drehfalle. Der Kraftschluss während des Anlagewechsels kann zum einen eine kontinuierliche Öffnungsbewegung des Schlosshalters während der Bewegung der Drehfalle in Öffnungsdrehrichtung bereitstellen, was einen erhöhten Komfort für einen Bediener einer zu öffnenden Fronthaube gewährleistet. Zum anderen kann der Kraftschluss zwischen dem Schenkel und dem Schlosshalter während des Anlagewechsels auch das Geräusch beim Auswerfen des Schlosshalters reduzieren.

In einer besonders bevorzugten Ausführungsform weist der Schenkel in einer ersten Ebene senkrecht zur Drehachse der Auswurffeder zumindest einen zur Drehachse der Auswurffeder gekrümmten ersten Abschnitt auf. Der erste Abschnitt ist konkav, d. h. nach innen gekrümmt, wobei die Innenseite ausgehend von dem Schenkel durch diejenige Seite definiert ist, auf welcher sich die Drehachse der Auswurffeder befindet. Sehr vorteilhaft liegt in der Hauptraststellung der Drehfalle der erste Abschnitt an dem Schlosshalter an.

Die konkave Krümmung des ersten Abschnittes des Schenkels kann bewirken, dass im Vergleich zu einer Variante, bei welcher der Schenkel einen geraden ersten Abschnitt aufweist, eine Hubstrecke des Schlosshalters pro überstrichenen Drehwinkel des Schenkels, im Folgenden als relative Hubstrecke des Schlosshalters bezeichnet, reduziert werden kann.

Die reduzierte relative Hubstrecke des Schlosshalters während der Drehung des Schenkels in Öffnungsdrehrichtung bewirkt, dass die von der Auswurffeder abgegebene Arbeit pro Hubstrecke des Schlosshalters erhöht ist und dadurch die auf den Schlosshalter wirkende Federkraft der Auswurffeder erhöht ist. Somit kann bei einer Sicherheitsvorrichtung mit einer Auswurffeder mit einem Schenkel mit einem ersten gekrümmten Abschnitt die Auswurffeder geringer dimensioniert werden, wodurch das Gewicht und der nötige Bauraum der Sicherheitsvorrichtung reduziert werden kann. Darüber hinaus kann bei einem Einfedern der Drehfalle die reduzierte relative Hubstrecke eine erhöhte Energieaufnahme der Auswurffeder pro zurückgelegter Hubstrecke ermöglichen, wodurch die Sicherheit der Sicherheitsvorrichtung erhöht ist. Dieser Vorteil kann besonders gut gewährleistet sein, wenn der Schlosshalter in der Hauptraststellung an dem ersten Abschnitt anliegt.

Im Rahmen einer bevorzugten Ausgestaltung ist vorgesehen, dass der erste Abschnitt des Schenkels in der Hauptraststellung eine nahezu waagerechte Ausrichtung aufweist und an dem Schlosshalter anliegt. Die Ausrichtung ist durch eine Verbindungslinie zwischen einem Anfang und einem Ende des ersten Abschnittes vorgegeben, wobei sich der erste Abschnitt entlang des Schenkels erstreckt.

Die nahezu waagerechte Ausrichtung des ersten Abschnittes des Schenkels in der Hauptraststellung bezieht sich insbesondere auf einen Zustand der Sicherheitsvorrichtung, in welchem diese in ein Kraftfahrzeug eingebaut ist. In dem eingebauten Zustand verläuft eine exakt waagerechte Linie parallel zu einer Fahrzeuglängsachse des Kraftfahrzeugs. Nahezu waagerecht meint, dass die Verbindungslinie einen Winkel von zumindest kleiner als 20 Grad, bevorzugt kleiner als 15 Grad, mit der Fahrzeuglängsachse einschließt. Besonders vorteilhaft grenzt der waagerechte erste Abschnitt des Schenkels an eine Windung der Auswurffeder.

Die nahezu waagerechte Ausrichtung des ersten Abschnittes des Schenkels in der Hauptraststellung kann bewirken, dass bei einer anfänglichen Drehung des Schenkels eine Normalkraft, welche von dem Schenkel auf den Schlosshalter wirkt, nahezu vertikal, insbesondere senkrecht zur Fahrzeuglängsachse, nach oben ausgerichtet ist und nahezu die gesamte Normalkraft gegen eine über den Schlosshalter übertragene Gewichtskraft wirkt. Dies kann ermöglichen, dass die Auswurffeder zum Antreiben der Drehfalle in die Öffnungsdrehrichtung und bevorzugt zum Auswerfen des Schlosshalters geringer dimensioniert werden kann. Darüber hinaus kann die nahezu waagerechte Ausrichtung des ersten Abschnittes eine erhöhte Energieaufnahme der Auswurffeder pro zurückgelegter Hubstrecke ermöglichen, wodurch die Sicherheit der Sicherheitsvorrichtung erhöht ist. Dieser Vorteil kann besonders gut gewährleistet sein, wenn der Schlosshalter in der Hauptraststellung an dem ersten Abschnitt anliegt.

In einer bevorzugten Ausführungsform ist vorgesehen, dass der Schenkel in der ersten Ebene oder einer zweiten Ebene senkrecht zur Drehachse der Auswurffeder zumindest einen zum ersten Abschnitt angrenzenden zweiten Abschnitt aufweist, wobei der zweite Abschnitt eine gegenüber dem ersten Abschnitt entgegengesetzt orientierte Krümmung aufweist. In dieser Ausgestaltung ist der zweite Abschnitt konvex, d. h. nach außen gekrümmt, wobei die Außenseite durch diejenige Seite definiert ist, welche vom Schenkel aus gesehen gegenüber der Seite liegt, auf welcher sich die Drehachse der Auswurffeder befindet.

Die konvexe Krümmung des zweiten Abschnittes kann eine Erhöhung der relativen Hubstrecke des Schlosshalters pro Drehwinkel des Schenkels bewirken. Eine derartige Erhöhung der relativen Hubstrecke des Schlosshalters bewirkt, dass eine Beschleunigung des Schlosshalters, welche durch ein Auswerfen der Auswurffeder verursacht wird, in dem zweiten Abschnitt verringert wird. Eine geringere Beschleunigung des Schlosshalters in dem zweiten Abschnitt erhöht die Zeit, in welcher der Schlosshalter an dem zweiten Abschnitt des Schenkels entlangstreicht.

Bevorzugt liegt der Schlosshalter während des Anlagewechsels des Schenkels von dem Schlosshalter zur Drehfalle an dem zweiten Abschnitt des Schenkels an. Durch die mittels der konvexen Krümmung des zweiten Abschnittes erreichte Reduzierung der Beschleunigung des Schlosshalters kann ein Zeitraum, in welchem der Anlagewechsel vollzogen wird, erhöht werden. Eine Erhöhung dieses Zeitraumes kann zum einen bei einer Auslegung der Sicherheitsvorrichtung die Anpassung des Mitnehmers an die Geometrie des Schenkels erleichtern und zum anderen das Geräusch während des Anlagewechsels verringern und einen Kraftschluss zwischen dem Schenkel und dem Schlosshalter sicherstellen.

Eine vorteilhafte Weiterbildung sieht vor, dass der Schenkel in der ersten Ebene, der zweiten Ebene oder einer dritten Ebene senkrecht zur Drehachse der Auswurffeder zumindest einen zum zweiten Abschnitt angrenzenden dritten Abschnitt aufweist, wobei der dritte Abschnitt eine gegenüber dem zweiten Abschnitt entgegengesetzt orientierte Krümmung aufweist. Dabei ist die Krümmung des dritten Abschnittes genauso wie die Krümmung des ersten Abschnittes orientiert, d.h. sie ist konkav. Die konkave Krümmung des dritten Abschnittes kann in gleicher Weise eine Hubstrecke des Mitnehmers pro überstrichenen Drehwinkel des Schenkels reduzieren wie die konkave Krümmung des ersten Abschnittes eine relative Hubstrecke des Schlosshalters reduzieren kann. Dadurch kann das von der Auswurffeder auf die Drehfalle wirkende Drehmoment erhöht werden, wodurch die Auswurffeder geringer dimensioniert werden kann.

Die Krümmungen des ersten, zweiten und/oder dritten Abschnittes können in einer Ausgestaltung vom Betrag her konstant über einer Länge des Schenkels verlaufen. In einer anderen Ausführungsform können die Beträge der jeweiligen Krümmungen über der Länge des Schenkels variieren.

Die Erfindung schlägt gemäß einem zweiten Aspekt ein Verfahren zum Betreiben der gemäß dem ersten Aspekt ausgebildeten Sicherheitsvorrichtung vor. Das Verfahren weist zumindest folgende Schritte auf. In einem ersten Schritt wird die Drehfalle in Schließdrehrichtung gedreht. In einem zweiten Schritt wird das Blockierelement in die Blockadestellung bewegt. In einem dritten Schritt wird die Drehfalle mittels des Blockierelementes abgebremst. In einem vierten Schritt wird das Blockierelement in die Freigabestellung bewegt. In einem fünften Schritt wird die Schutzlage, welche zugleich die Verriegelungsstellung der Sicherheitsvorrichtung ist, bereitgestellt. Diese Reihenfolge der Schritt stellt eine bevorzugte Ausgestaltung des Verfahrens dar.

Eine Weiterbildung des Verfahrens kann vorsehen, dass in einem weiteren sechsten Schritt die Drehfalle aus der Schutzlage heraus in Schließdrehrichtung gedreht wird. Dies kann beispielsweise bei einem Unfall der Fall sein, wobei ein Objekt, insbesondere ein Fußgänger, auf die Fronthaube trifft. In einem siebten Schritt wird eine Aufprallabfangenergie aufgenommen. Der sechste und der siebte Schritt werden bevorzugt parallel ausgeführt. Die Aufprallabfangenergie kann beispielsweise durch ein Spannen der Auswurffeder über die Stellung, welche diese in der Hauptraststellung einnimmt, hinaus in Schließdrehrichtung aufgenommen werden. Die Aufprallabfangenenergie kann in einer Weiterbildung von einem zusätzlichen Unfallschutzelement der Sicherheitsvorrichtung, wie beispielsweise einem Schaum, aufgenommen werden.

Die Erfindung schlägt gemäß einem dritten Aspekt ein Verfahren zum Öffnen der gemäß dem ersten Aspekt ausgebildeten Sicherheitsvorrichtung vor, wobei das Verfahren folgende Schritte aufweist. In einem ersten Schritt wird die Sperrklinke aus der Sperrstellung ausgelenkt. Das Auslenken erfolgt dabei solange, bis die Sperrklinke die Freigabestellung erreicht hat. Ein Auslenken der Sperrklinke kann zum Beispiel mittels eines Elektromotors bewirkt werden. In einem zweiten Schritt wird die Drehfalle ausgehend von der Hauptraststellung in die Öffnungsdrehrichtung gedreht, wobei dies mittels der Auswurffeder unterstützt wird. In einem dritten Schritt wird die Drehfalle verzögert. Dies kann durch ein Abbremsen der Drehfalle in die Schließdrehrichtung erfolgen und/oder vorteilhaft durch ein Stoppen der Drehfalle an der Anschlagfläche des Auslegers der Sperrklinke. Nach dem Auslenken der Sperrklinke wird die Sperrklinke in einem vierten Schritt in Richtung der Sperrstellung bewegt. Dabei wird die Sperrklinke bevorzugt von der Sperrklinkenfeder angetrieben. In einem fünften Schritt ist ein Einrasten der Drehfalle in der Vorraststellung vorgesehen. Dies ist insbesondere dadurch ermöglicht, dass die Sperrklinke die Sperrstellung erreicht, bevor die Drehfalle die Vorraststellung einnimmt. Die hier aufgeführte Reihenfolge der einzelnen Schritte des Verfahrens ist eine bevorzugte Reihenfolge. Möglich ist auch, dass die Drehfalle nach einer anfänglichen Bewegung der Sperrklinke in Richtung der Sperrstellung verzögert wird.

In einer parallelen Patentanmeldung derselben Anmelderin mit dem Titel "Sicherheitsvorrichtung für ein Kraftfahrzeug mit einer Drehfalle und einer Vorraststellung und einer Hauptraststellung" ist eine Sicherheitsvorrichtung beschrieben, bei welcher eine Sperrklinke in einer Vorraststellung einer Drehfalle an einem Fangarm und in einer Hauptraststellung der Drehfalle an einem Lastarm der Drehfalle eingerastet ist. Vor allem gehören die in der parallelen Patentanmeldung beschriebenen technischen Merkmale, welche ein derartiges Einrasten der Sperrklinke ermöglichen zur ursprünglichen Offenbarung dieser Anmeldung. Dies betrifft insbesondere die möglichen Ausgestaltungen des Verzögerungsmechanismus und das Verfahren zum Öffnen der Sicherheitsvorrichtung.

In einer weiteren parallelen Patentanmeldung derselben Anmelderin mit dem Titel "Sicherheitsvorrichtung für ein Kraftfahrzeug mit einer Drehfalle und einer Auswurffeder" ist eine Sicherheitsvorrichtung mit einem Anlagewechsel eines Schenkels einer Auswurffeder beschrieben. Vor allem gehören die in der parallelen Patentanmeldung beschriebenen technischen Merkmale, welche einen Anlagewechsel des Schenkels von dem Schlosshalter hin zur Drehfalle, eine Erhöhung einer relativen Hubstrecke des Schlosshalters und eine Verringerung der relativen Hubstrecke des Schlosshalters ermöglichen, zur ursprünglichen Offenbarung dieser Anmeldung. Dies betrifft insbesondere die Ausgestaltung der Drehfallenfeder als Auswurffeder und die geometrische Ausgestaltung des Schenkels der Auswurffeder.

Weitere Vorteile, Merkmale und Einzelheiten der Erfindung ergeben sich aus der nachfolgenden Beschreibung sowie anhand der Figuren.

Diese zeigen in:
- FIG. 1a bis 1e: eine Schnittansicht einer Sicherheitsvorrichtung bei einem Schließvorgang;
- FIG. 1f: die Sicherheitsvorrichtung nach den FIG. 1a bis 1e bei einem Absenken des Schlosshalters;
- FIG. 2a bis 2f: die Sicherheitsvorrichtung nach den FIG. 1a bis 1f bei einem Öffnungsvorgang;
- FIG. 3: die Sicherheitsvorrichtung nach den FIG. 1a bis 1f und 2a bis 2f mit einer Fronthaube;
- FIG. 4: eine Schnittansicht einer weiteren Sicherheitsvorrichtung;
- FIG. 5: eine Schnittansicht einer weiteren Sicherheitsvorrichtung;
- FIG. 6: eine Draufsicht der Sicherheitsvorrichtung nach FIG. 5.

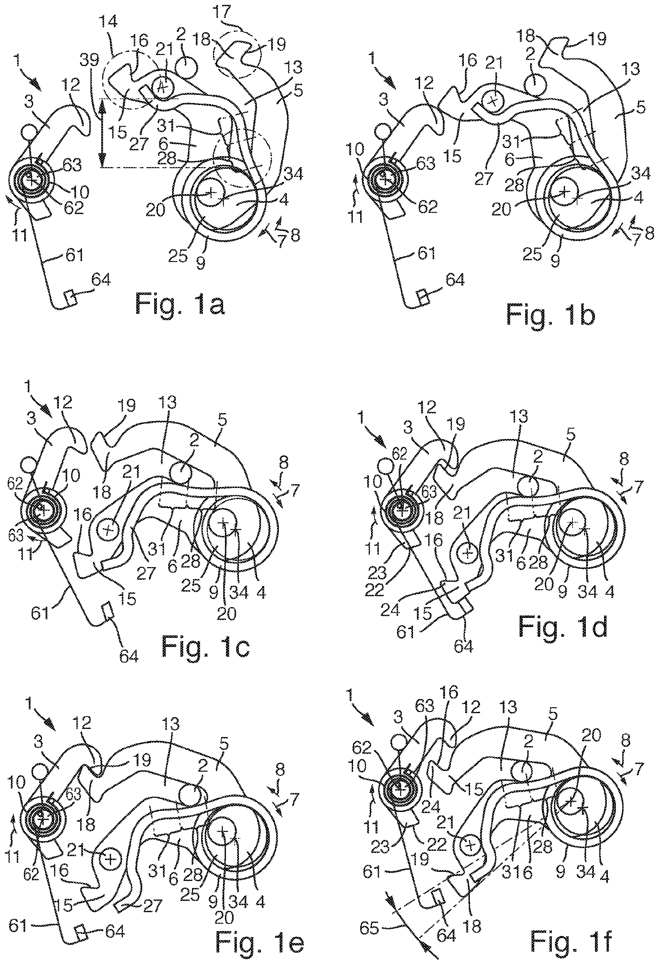

FIG. 1a zeigt eine Sicherheitsvorrichtung 1 für ein Kraftfahrzeug mit einem Schlosshalter 2, einer Sperrklinke 3 und einer Drehfalle 4. Die Drehfalle 4 hat einen Lastarm 5, einen Fangarm 6, eine Öffnungsdrehrichtung 7, eine Schließdrehrichtung 8, eine Vorraststellung und eine Hauptraststellung. Weiterhin umfasst die Sicherheitsvorrichtung 1 eine Auswurffeder 9 zum Auswerfen des Schlosshalters 2, welche die Drehfalle 4 in die Öffnungsdrehrichtung 7 beaufschlagt. Der Fangarm 6 und der Lastarm 5 bilden ein gabelförmiges Einlaufmaul 13 der Drehfalle 4 aus, welches den Schlosshalter 2 aufnimmt. Der Lastarm 5 und der Fangarm 6 sind zumindest teilweise bogenförmig ausgebildet, um ein Führen des Schlosshalters 2 innerhalb des Einlaufmauls 13 bei einer Schließbewegung und einer Öffnungsbewegung der Drehfalle 4 zu ermöglichen.

Der Fangarm 6 hat einen Kopfbereich 14 mit einer Abkröpfung 15 in Richtung der Öffnungsdrehrichtung 7 der Drehfalle 4, wobei die Abkröpfung 15 eine Vorrast 16 ausbildet. Ebenso weist der Lastarm 5 einen Kopfbereich 17 mit einer Abkröpfung 18 in Richtung der Öffnungsdrehrichtung 7 der Drehfalle 4 auf, wobei die Abkröpfung 18 eine Hauptrast 19 ausbildet. Die Sperrklinke 3 hat eine Rastnase 12 und eine Sperrklinkenfeder 10, welche die Sperrklinke 3 in eine Sperrdrehrichtung 11 beaufschlagt.

In der in FIG. 1e gezeigten Hauptraststellung der Drehfalle 4 umgreift die Rastnase 12 die Hauptrast 19 und sichert die Drehfalle 4 gegen eine Drehung in Öffnungsdrehrichtung 7. Weiterhin beaufschlagt in der Hauptraststellung der Drehfalle 4 die Auswurffeder 9 über den Schlosshalter 2 die Drehfalle 4 in Richtung der Öffnungsdrehrichtung 7. Durch diese Beaufschlagung wird die Hauptrast 19 gegen die Rastnase 12 der Sperrklinke 3 gedrückt und ein Druck an einer Kontaktfläche der Rastnase 12 erzeugt, welche die Sperrklinke 3 zusätzlich zu der über die Sperrklinkenfeder 10 wirkenden Kraft in einer in FIG. 1e gezeigten Sperrstellung hält.

In der in FIG. 1e gezeigten Hauptraststellung der Drehfalle 4 nimmt die Sicherheitsvorrichtung 1 eine Verriegelungsstellung ein. In einem in ein Kraftfahrzeug eingebauten Zustand der Sicherheitsvorrichtung 1 ist der Schlosshalter 2 bevorzugt an einer Fronthaube angeordnet, wobei in der Verriegelungsstellung der Sicherheitsvorrichtung 1 die Fronthaube verschlossen ist.

Die Sperrklinke 3 ist entgegen der Sperrdrehrichtung 11 aus der in FIG. 1e gezeigten Sperrstellung hin zu einer Passierstellung beweglich, wobei eine Bewegung der Sperrklinke 3 entgegen der Sperrdrehrichtung 11 vorzugsweise elektrisch auslösbar ist. Ist der Lastarm 5 oder der Fangarm 6 der Drehfalle 4 in Öffnungsdrehrichtung 7 an der Rastnase 12 der Sperrklinke 3 passierbar, befindet sich die Sperrklinke 3 in der Passierstellung.

Die Sicherheitsvorrichtung 1 weist weiterhin ein Blockierelement 61 auf, welches eine Blockadestellung und eine Freigabestellung hat. In FIG. 1a und 1b ist das Blockierelement 61 in der Freigabestellung gezeigt.

FIG. 1a bis 1f zeigen einen Bewegungsablauf der Sicherheitsvorrichtung 1 bei einem Verriegeln der Sicherheitsvorrichtung 1 und einem anschließenden Absenken des Schlosshalters 2.

FIG. 1a zeigt die Drehfalle 4 in einer Offenstellung, in welcher der Schlosshalter 2 an dem Fangarm 6 der Drehfalle 4 anliegt. In dieser Stellung ist der Schlosshalter 2 von dem Lastarm 5 freigegeben, wodurch der Schlosshalter 2 von oben in das Einlaufmaul 13 eintreten kann. Wird ausgehend von der in FIG. 1a gezeigten Offenstellung der Drehfalle 4 der Schlosshalter 2 niedergedrückt, beispielsweise durch ein Niederdrücken der an dem Schlosshalter 2 befestigten Fronthaube, stößt die Drehfalle 4 mit dem Kopfende 14 des Fangarmes 6 an der Rastnase 12 der Sperrklinke 3 an. Nach dem Anstoßen dreht sich die Drehfalle 4 vorzugsweise durch ein weiteres Absenken des Schlosshalters 2 weiter in die Schließdrehrichtung 8 und bewirkt ein Verschieben der Rastnase 12 und eine damit einhergehende Drehung der Sperrklinke 3 in Richtung der Passierstellung.

Das Blockierelement 61 und die Sperrklinke 3 sind um eine gemeinsame Drehachse 62 drehbar gelagert. Das Blockierelement 61 ist mit der Sperrklinke 3 mittelbar über ein Blockierfederelement 63 mechanisch verbunden, wobei eine Federsteifigkeit des Blockierfederelementes 63 eine Verzögerung einer Drehung des Blockierelementes 61 gegenüber der Sperrklinke 3 bewirkt. Über das Blockierfederelement 63 ist das Blockierelement 61 indirekt mittels der Sperrklinke 3 gesteuert, insbesondere angetrieben, wobei eine Drehung der Sperrklinke 3 eine Drehung des Blockierelementes 61 bewirkt. Das Blockierfederelement 63 ist in der in FIG. 1a bis 1f gezeigten Ausgestaltung als eine Blockierelementdrehfeder ausgeführt.

Dreht sich die Drehfalle 4 von der in FIG. 1b gezeigten Position weiter in die Schließdrehrichtung 8, passiert die Vorrast 16 die Rastnase 12 der Sperrklinke 3, und die Hauptrast 19 nähert sich der Rastnase 12, wie in FIG. 1c gezeigt ist. In FIG. 1c befindet sich die Sperrklinke 3 in der Passierstellung und das Blockierelement 61 in der Blockadestellung. Eine vorteilhafte Ausführungsform sieht vor, dass die Federsteifigkeit des Blockierfederelementes 63 derart an ein Massenträgheitsmoment des Blockierelementes 61 um die Drehachse 62 und an ein Massenträgheitsmoment der Drehfalle 4 um eine Drehachse 20 der Drehfalle 4 angepasst ist, dass sich das Blockierelement 61, angetrieben durch die Sperrklinke 3, in die in FIG. 1c gezeigte Blockadestellung bewegt, bevor die Abkröpfung 15 des Fangarmes einen Anschlag 64 des Blockierelementes 61 erreicht.

In der in FIG. 1c gezeigten Passierstellung der Sperrklinke 3 kann die Hauptrast 19 sich an der Rastnase 12 vorbeibewegen. Dies ermöglicht ein weiteres Absenken des Schlosshalters 2 von der in FIG. 1c gezeigten Position des Schlosshalters 2 bis zu der in FIG. 1d gezeigten Position des Schlosshalters 2.

FIG. 1d zeigt die Sicherheitsvorrichtung 1 in einer Durchschlagschutzstellung, in welcher die Abkröpfung 15 des Fangarmes 6 an dem Anschlag 64 des Blockierelementes 61 anliegt. In der Durchschlagschutzstellung der Sicherheitsvorrichtung 1 nimmt das Blockierelement 61 die Blockadestellung ein und blockiert mittels des Anschlages 64 die Drehfalle 4 in Schließdrehrichtung 8.

In der in den FIG. 1a bis 1f gezeigten Ausführungsform der Sicherheitsvorrichtung 1 bewirkt das Blockierfederelement 63 eine Verzögerung einer Drehung des Blockierelementes 61 gegenüber einer Drehung der Sperrklinke 3. Beispielweise kann sich in der Stellung der Sicherheitsvorrichtung 1, wie sie in FIG. 1c gezeigt ist, das Blockierelement 61 noch entgegengesetzt zur Sperrdrehrichtung 11 bewegen, obwohl sich die Sperrklinke 3 bereits in die Sperrdrehrichtung 11 dreht.

Die Sicherheitsvorrichtung 1 weist vorteilhaft ein aufeinander abgestimmtes Trägheitssystem auf, bei welchem das Blockierfederelement 63, ein Massenträgheitsmoment des Blockierelementes 61 um die Drehachse 62 des Blockierelementes 61, ein Massenträgheitsmoment der Sperrklinke 3 um die Drehachse 62 der Sperrklinke 3 und die Sperrklinkenfeder 10 derart aufeinander abgestimmt sind, dass die Sperrklinke 3 ausgehend von der in FIG. 1c gezeigten Passierstellung eine höhere Drehbeschleunigung in die Sperrdrehrichtung 11 als das Blockierelement 61 hat. Dieses aufeinander abgestimmte Trägheitssystem ermöglicht, dass die Sperrklinke 3 nach einer Drehung von der Passierstellung hin zur Sperrstellung die in FIG. 1d gezeigte Sperrstellung einnimmt und das Blockierelement 61 sich gleichzeitig in der Blockadestellung befindet. Bei dieser Drehung der Sperrklinke 3 in Richtung der Sperrstellung spannt die Sperrklinke 3 das Blockierfederelement 63 in die Sperrdrehrichtung 11, während das Blockierelement 61 in der Blockadestellung verharrt.

Besonders vorteilhaft weist die Sicherheitsvorrichtung 1 in der in FIG. 1d gezeigten Durchschlagschutzstellung einen Kontakt zwischen der Abkröpfung 15 des Fangarmes 6 und dem Blockierelement 61 bzw. dem Anschlag 64 des Blockierelementes 61 auf, wobei der Kontakt eine Drehung des Blockierelementes 61 in Richtung der Freigabestellung des Blockierelementes 61, vorzugsweise aufgrund von Reibung, hemmt.

In der in FIG. 1a bis 1f gezeigten Ausführungsform ist das Blockierfederelement 63 als Drehfeder ausgeführt. In einer davon abgewandelten Ausführungsform kann das Blockierfederelement 63 auch als ein elastisches Verbundelement, welches den Anschlag 64 mit der Sperrklinke 3 verbindet, ausgebildet sein. In dieser Variante bilden der Anschlag 64 und das Blockierfederelement 63 das Blockierelement 61 aus.

Ausgehend von der in FIG. 1d gezeigten Durchschlagschutzstellung der Drehfalle 4 bewegt sich die Drehfalle 4 nach einem Abbremsen mittels des Anschlages 64 in Öffnungsdrehrichtung 7 in Richtung der Hauptraststellung, da die Drehfalle 4 von der Auswurffeder 9 in Öffnungsdrehrichtung 7 beaufschlagt ist.

Befindet sich die Drehfalle 4 in der in FIG. 1e gezeigten Hauptraststellung, ist ein Kontakt zwischen der Abkröpfung 15 des Fangarmes 6 und dem Blockierelement 61 aufgehoben.

Das in Sperrdrehrichtung 11 gespannte Blockierfederelement 63 beschleunigt, ausgehend von der in FIG. 1d gezeigten Blockadestellung des Blockierelementes 61, den Anschlag 64 und damit das Blockierelement 61 in die Sperrdrehrichtung 11 hin zur Freigabestellung des Blockierelementes 61. Durch das Spannen des Blockierfederelementes 63 bei der Bewegung der Sperrklinke 3 von der Passierstellung hin zur Sperrstellung ist das Blockierelement 61 indirekt über die Sperrklinke 3 gesteuert und angetrieben.

In der Freigabestellung des Blockierelementes 61 ist die Drehfalle 4 von dem Blockierelement 61 in Schließdrehrichtung 8 freigegeben und ein Absenken des Schlosshalters 2 ermöglicht.

Das Absenken des Schlosshalters 2, ausgehend von der Hauptraststellung der Drehfalle 4, ist in FIG. 1f gezeigt. In einer in FIG. 1f gezeigten Aufprallabfangstellung der Sicherheitsvorrichtung 1 ist die Drehfalle 4 durch ein Absenken des Schlosshalters 2 in Schließdrehrichtung 8 in eine Aufprallabfangstellung verdreht. In dieser Aufprallabfangstellung der Drehfalle 4 ist die Auswurffeder 9 weiter in die Schließdrehrichtung 8 gespannt als in der Hauptraststellung der Drehfalle 4, wobei in der Auswurffeder 9 eine Aufprallabfangenergie gespeichert ist.

Die Sicherheitsvorrichtung 1 kann, ausgehend von einer in FIG. 1e gezeigten Schutzlage der Sicherheitsvorrichtung 1, die Aufprallabfangenergie mittels der Auswurffeder 9 aufnehmen, ohne dass ein Aktuator, beispielsweise ein pyrotechnischer Aktuator, betätigt wird. Die Sicherheitsvorrichtung 1 stellt somit mit der Hauptraststellung der Drehfalle 4 die Schutzlage der Sicherheitsvorrichtung 1 bereit, wobei die Sicherheitsvorrichtung 1 einen normalen Verriegelungszustand einnimmt.

Die Sicherheitsvorrichtung 1 stellt mit der Aufprallabfangstellung der Drehfalle 4 einen Aufprallabfangdrehwinkelsektor 65 bereit, in welchen die Drehfalle 4 in Schließdrehrichtung 8 über die Hauptraststellung hinaus drehbar ist, wobei mit einer Drehung der Drehfalle 4 in den Aufprallabfangdrehwinkelsektor 65 hinein ein Absenken von bevorzugt etwa 15 mm des Schlosshalters 2 bzw. der an dem Schlosshalter 2 befestigten Fronthaube einhergeht.

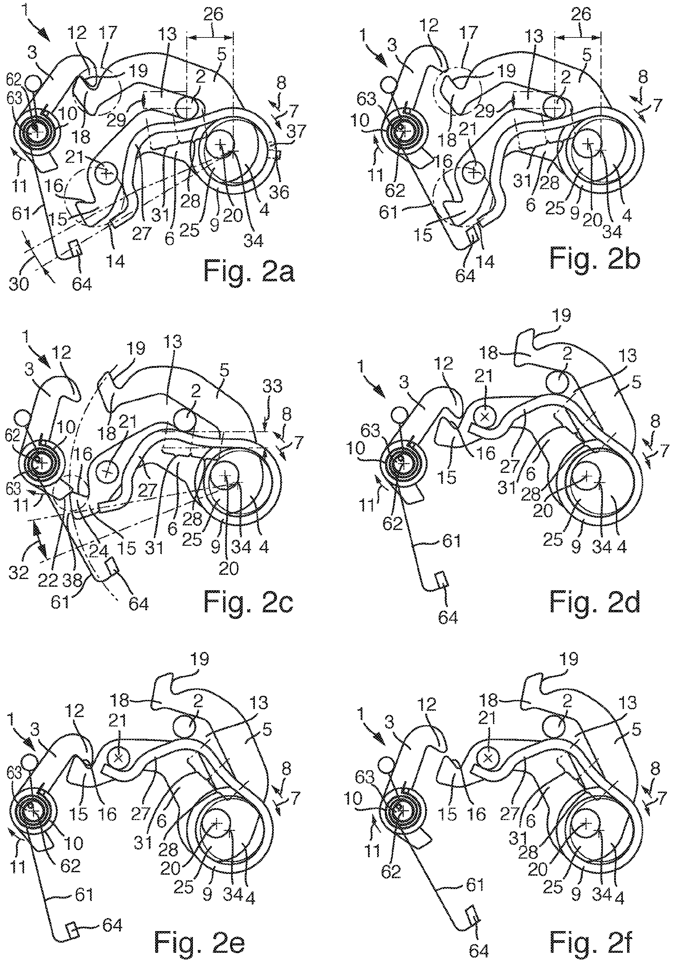

FIG. 2a bis 2f zeigen die Sicherheitsvorrichtung 1 bei einem Öffnungsvorgang. In der in FIG. 2a gezeigten Hauptraststellung der Drehfalle 4 ist besonders vorteilhaft eine Bewegung der Sperrklinke 3 von der Sperrstellung hin zur Passierstellung mittels eines elektrischen Antriebes auslösbar. FIG. 2b zeigt die Sperrklinke 3 in der Passierstellung, in welcher die Abkröpfung 18 des Lastarmes 5 an der Rastnase 12 passierbar ist. In der Passierstellung der Sperrklinke 3 beschleunigt die Auswurffeder 9 den Schlosshalter 2 nach oben, wobei der Schlosshalter 2 unmittelbar an dem Lastarm 5 der Drehfalle 4 anliegt und durch seine Bewegung nach oben die Drehfalle 4 in die Öffnungsdrehrichtung 7 dreht. Eine spezielle Ausführungsform kann vorsehen, dass der elektrische Antrieb die Sperrklinke 3 kurzzeitig aus der Sperrstellung bewegt und unmittelbar nach einem Erreichen der Passierstellung der Sperrklinke 3 eine Wirkung des elektrischen Antriebes auf die Sperrklinke 3 aufgehoben ist.

Es ist im Rahmen des Möglichen, dass eine Federsteifigkeit der Sperrklinkenfeder 10 derart an eine Federsteifigkeit der Auswurffeder 9 angepasst ist, dass bei einem Entsichern der Drehfalle 4 aus der Hauptraststellung ein Einrasten in die Vorraststellung sichergestellt ist. Eine derartige Anpassung der Federsteifigkeit der Sperrklinkenfeder 10 sieht insbesondere vor, dass die Sperrklinkenfeder 10 zumindest eine derartige Drehbeschleunigung auf die Sperrklinke 3 ausübt, dass sich die Sperrklinke 3 von der Passierstellung aus rechtzeitig in die Sperrstellung zurückbewegt, bevor der Fangarm 6 die Rastnase 12 passieren kann.

Zusätzlich oder alternativ zu dieser Anpassung der Federsteifigkeit der Sperrklinkenfeder 10 kann die Sicherheitsvorrichtung 1 einen Verzögerungsmechanismus 38 aufweisen. Der Verzögerungsmechanismus 38 ist in FIG. 2c gezeigt und in Form einer Anschlagfläche 22 an einem Ende eines Auslegers 23 der Sperrklinke 3 und einem keilförmigen Ende 24 der Abkröpfung 15 des Fangarmes 6 ausgebildet.

Der Verzögerungsmechanismus 38 ist derart ausgelegt, dass in der Passierstellung der Sperrklinke 3 und bei einer Drehung der Drehfalle 4 ausgehend von der Hauptraststellung in die Öffnungsdrehrichtung 7 eine Bahnkurve 35 einer Spitze des keilförmigen Endes 24 die Anschlagfläche 22 des Auslegers 23 schneidet. Bei einem Auftreffen des keilförmigen Endes 24 auf die Anschlagfläche 22 wird die Drehung der Drehfalle 4 in Öffnungsdrehrichtung 7 gestoppt. Durch das Stoppen der Drehfalle 4 ist es möglich, dass die Sperrklinkenfeder 10 die Sperrklinke 3 in die Sperrstellung bewegt, noch bevor die Abkröpfung 15 des Fangarmes 6 die Rastnase 12 passieren kann. Im Vergleich zu einer Variante, bei welcher die Drehfalle 4 nicht mittels des Verzögerungsmechanismus 38 gestoppt wird, kann die Sperrklinkenfeder 10 geringer dimensioniert werden, da zur Bewegung der Sperrklinke 3 von der Passierstellung in die Sperrstellung mehr Zeit zur Verfügung steht.

FIG. 2d zeigt die Drehfalle 4 in einer Zwischenstellung zwischen der Hauptraststellung und der Vorraststellung, bei welcher ein Ausleger der Auswurffeder 9 sowohl an dem Schlosshalter 2 als auch an einem Mitnehmer 21, welcher an dem Fangarm 6 angeordnet ist, anliegt. Nach Erreichen dieser Zwischenstellung der Drehfalle 4 beaufschlagt die Auswurffeder 9 die Drehfalle 4 unmittelbar über den Mitnehmer 21 in die Öffnungsdrehrichtung 7.

FIG. 2e zeigt die Drehfalle 4 in der Vorraststellung, in welcher die Rastnase 12 die Abkröpfung 15 des Fangarmes 6 umgreift. In dieser Vorraststellung ist eine Drehung der Drehfalle 4 in Öffnungsdrehrichtung 7 mittels der Sperrklinke 3 blockiert. Die Drehfalle 4 ist aus der Vorraststellung mittels einer Drehung der Sperrklinke 3 von der Sperrstellung in die Passierstellung lösbar, was in FIG. 2f gezeigt ist. Ausgehend von der in FIG. 2f gezeigten Stellung der Drehfalle 4 bewegt die Auswurffeder 9 die Drehfalle 4 weiter in die Öffnungsdrehrichtung 7 hin zu der in FIG. 1a gezeigten Offenstellung der Drehfalle 4, wobei der Schlosshalter 2 weiter angehoben wird. Bei dem in FIG. 2a bis 2f und FIG. 1a gezeigten Öffnungsvorgang der Sicherheitsvorrichtung 1 bewegt die Sperrklinkenfeder 10 die Sperrklinke 3 zurück in die Sperrstellung, welche in FIG. 1a gezeigt ist.

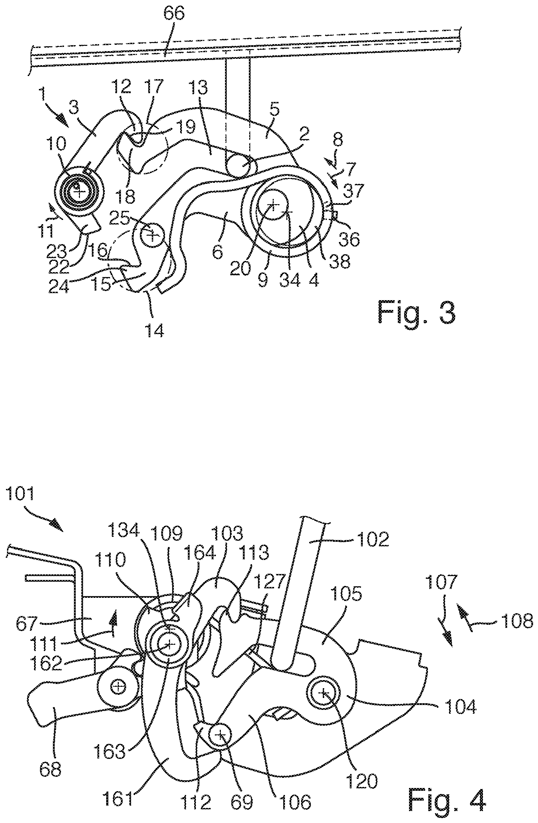

FIG. 3 zeigt eine an dem Schlosshalter 2 angeordnete Fronthaube 66, wie es beispielsweise bei der in einem in ein Kraftfahrzeug eingebauten Zustand befindlichen Sicherheitsvorrichtung 1 vorgesehen sein kann. Vorzugsweise ist die Sicherheitsvorrichtung 1 in einem vorderen Bereich der Fronthaube 66 angeordnet. Alternativ dazu kann die Sicherheitsvorrichtung 1 in einem hinteren Bereich der Fronthaube 66 angeordnet sein. Die Fronthaube 66 und der an der Fronthaube 66 angeordnete Schlosshalter 2 nehmen in der Hauptraststellung der Drehfalle 4, welche in FIG. 1e beziehungsweise in FIG. 2a gezeigt ist, und der Schutzlage der Sicherheitsvorrichtung 1 die in FIG. 3 jeweils gestrichelt dargestellten Positionen ein. In der Aufprallabfangstellung der Drehfalle 4 und der Sicherheitsvorrichtung 1, welche in FIG. 3 und in FIG. 1f gezeigt ist, ist die Fronthaube 66 und der Schlosshalter 2 abgesenkt, wie in FIG. 3 mittels durchgezogenen Linien dargestellt ist. Das Blockierelement 61 ist nur zur Vereinfachung der Darstellung nicht in FIG. 3 eingezeichnet.

Die Auswurffeder 9 ist als Schenkelfeder ausgebildet, wobei die Auswurffeder 9 einen Schenkel 27 und ein Hauptfedermaterial aufweist, welches der Auswurffeder 9 eine Federsteifigkeit verleiht. Das Hauptfedermaterial ist bevorzugt ein Metall. In der in FIG. 2a gezeigten Ausführungsform ist vorgesehen, dass der Schlosshalter 2 in der Hauptraststellung an dem Schenkel 27, bevorzugt an dem Hauptfedermaterial, anliegt. Eine davon abweichende, aber durchaus im Rahmen der Erfindung liegende Ausgestaltung sieht vor, dass das Hauptfedermaterial mit einer Schutzhülle versehen ist, wobei die Schutzhülle als Teil des Schenkels 27 betrachtet werden kann. In diesem Fall liegt der Schenkel 27 in der Hauptraststellung ebenfalls an dem Schlosshalter 2 an.

FIG. 1a zeigt die Drehfalle 4 in der Offenstellung. FIG. 2d zeigt die Drehfalle 4 in einer Zwischenstellung, in welcher sich die Drehfalle 4 zwischen der Hauptraststellung und der Offenstellung befindet und ausgehend von der Hauptraststellung in die Öffnungsdrehrichtung 7 gedreht ist. In der Zwischenstellung beaufschlagt der Schenkel 27 unmittelbar die Drehfalle 4 an einem Mitnehmer 21 der Drehfalle 4. In einer speziellen Ausgestaltung ist der Mitnehmer 21 ein Teil der Oberfläche des Fangarmes 6. In jedem Fall ist der Mitnehmer 21 kraftschlüssig und formschlüssig mit dem Fangarm 6 verbunden, so dass ein unmittelbares Anlegen des Schenkels 27 an dem Mitnehmer 21 einem unmittelbaren Anlegen des Schenkels 27 an der Drehfalle 4 entspricht.

In der in FIG. 1a gezeigten Offenstellung der Drehfalle 4 beaufschlagt der Schenkel 27 die Drehfalle 4 ebenfalls unmittelbar in Öffnungsdrehrichtung 7. Weiterhin ist in dieser Stellung ein Kontakt zwischen dem Schlosshalter 2 und dem Schenkel 27 aufgehoben.

Dadurch, dass der Schenkel 27 in der Offenstellung der Drehfalle 4 unmittelbar an der Drehfalle 4 anliegt, ist die Drehfalle 4 in Öffnungsdrehrichtung 7 beaufschlagt und der Fangarm 6 gegen den Schlosshalter 2 gedrückt gehalten. Somit kann mittels der Auswurffeder 9 eine Hubkraft auf den Schlosshalter 2 übertragen werden und ein Kontakt zwischen dem Fangarm 6 und dem Schlosshalter 2 in der Offenstellung der Drehfalle 4 sichergestellt werden.

Eine Aufrechterhaltung eines Kontaktes zwischen dem Fangarm 6 und dem Schlosshalter 2 kann ein Geräusch beim Auswerfen des Schlosshalters 2 im Gegensatz zu einer Ausgestaltung verringern, bei welcher der Schenkel 27 in der Offenstellung an dem Schlosshalter 2 anliegt und ein Anschlagen des Schlosshalters 2 an einer Innenfläche des Lastarmes 5 bewirken kann.

Weiterhin kann eine unmittelbar auf die Drehfalle 4 wirkende Hubkraft beim Öffnen der Drehfalle 4 bis hin zur Offenstellung eine Vergrößerung einer Hubstrecke 29 des Schlosshalters 2 im Gegensatz zu einer Variante ermöglichen, bei welcher der Schenkel 27 beim Öffnen der Drehfalle 4 nur an dem Schlosshalter 2 anliegt. Eine Erhöhung der Hubstrecke 29 vergrößert einen Bedienkomfort einer mit dem Schlosshalter 2 verbundenen Fronthaube dahingehend, dass ein Eingriffsbereich zwischen einer Kante der Fronthaube und einer darunter befindlichen weiteren Kante einer Karosserie des Kraftfahrzeuges erhöht wird, wodurch ein Ergreifen der Fronthaube erleichtert ist.

In der in den FIG. 1a bis 1f und 2a bis 2f gezeigten Ausführungsform der Sicherheitsvorrichtung 1 hat die Auswurffeder 9 eine Drehachse 34, welche versetzt zu der Drehachse 20 der Drehfalle 4 angeordnet ist. Die Auswurffeder 9 hat bevorzugt ein festes Ende 36, welches sich an einer ortsfesten Stütze 37 der Sicherheitsvorrichtung 1 abstützt. Das feste Ende 36 erstreckt sich vorteilhaft bis zu einer Lagerbuchse 25 und umgibt die Lagerbuchse 25 derart, dass das feste Ende 36 in Bezug zur Drehachse 34 der Auswurffeder 9 unbeweglich ist. Ein Hebelarm 26, welcher sich zwischen dem Mittelpunkt des Schlosshalters 2 und der Drehachse 34 der Auswurffeder 9 erstreckt, ist durch die versetzt angeordneten Drehachsen 34 und 20 im Vergleich zu einer Sicherheitsvorrichtung, bei welcher die Auswurffeder 9 und die Drehfalle 4 eine gemeinsame Drehachse aufweisen, vergrößert. Der vergrößerte Hebelarm 26 kann vorteilhaft eine Energieaufnahme der Auswurffeder 9 bei einem Absenken der Drehfalle 4 von der Hauptraststellung in die Aufprallabfangstellung erhöhen, wodurch die Sicherheit der Sicherheitsvorrichtung 1 weiter erhöht werden kann. In einer davon verschiedenen Ausgestaltung können die Drehfalle 4 und die Auswurffeder 9 eine gemeinsame Drehachse aufweisen. Dies hat den Vorteil einer kompakteren Bauweise und einer Gewichtseinsparung.

Im Folgenden wird die Bildebene von FIG. 2a betrachtet, welche senkrecht zur Drehachse 34 der Auswurffeder 9 ausgerichtet ist und eine erste Ebene darstellt. Der Schenkel 27 der Auswurffeder 9 hat einen ersten Abschnitt 28, welcher in der ersten Ebene zur Drehachse 34 der Auswurffeder 9 gekrümmt ist und bevorzugt an eine Windung der Auswurffeder 9 angrenzt.

Der erste Abschnitt 28 ist konkav, d. h. nach innen gekrümmt, wobei eine Innenseite in Bezug zu dem Schenkel 27 durch diejenige Seite definiert ist, auf welcher sich die Drehachse 34 der Auswurffeder 9 befindet. In der in FIG. 2a dargestellten Hauptraststellung der Drehfalle 4 liegt der erste Abschnitt 28 an dem Schlosshalter an. Die konkave Krümmung des ersten Abschnittes 28 des Schenkels 27 kann bewirken, dass bei einer Drehung des Schenkels 27, ausgehend von der Hauptraststellung der Drehfalle 4 in Öffnungsdrehrichtung 7, im Vergleich zu einer Variante, bei welcher der Schenkel 27 einen geraden ersten Abschnitt 28 aufweist, eine Hubstrecke 29 des Schlosshalters 2 pro überstrichenem Drehwinkel 30 des Schenkels 27, im Folgenden relative Hubstrecke des Schlosshalters 2 genannt, reduziert ist.

Die reduzierte relative Hubstrecke des Schlosshalters 2 während der Drehung des Schenkels 27 in Öffnungsdrehrichtung 7 kann bewirken, dass die von der Auswurffeder 9 abgegebene Arbeit pro Hubstrecke des Schlosshalters 2 erhöht wird und dadurch die auf den Schlosshalter 2 wirkende Federkraft der Auswurffeder 9 erhöht ist. Somit kann bei dieser in FIG. 2a gezeigten Ausgestaltung die Auswurffeder 9 geringer dimensioniert werden, wodurch das Gewicht und der nötige Bauraum der Sicherheitsvorrichtung 1 reduziert werden kann. FIG. 2a zeigt weiterhin, dass der erste Abschnitt 28 einen Winkel von ungefähr 12 Grad mit einer waagerechten Linie in der Bildebene von FIG. 1a einschließt, d.h. nahezu waagerecht ausgerichtet ist.

Des Weiteren weist der Schenkel 27 einen an den ersten Abschnitt 28 angrenzenden zweiten Abschnitt 31 auf, wobei der zweite Abschnitt 31 eine gegenüber dem ersten Abschnitt 28 entgegengesetzt orientierte Krümmung aufweist. Der zweite Abschnitt 31 ist konvex, d. h. nach außen gekrümmt, wobei eine Außenseite durch diejenige Seite definiert ist, welche vom Schenkel 27 aus gesehen gegenüber derjenigen Seite liegt, auf welcher sich die Drehachse 34 der Auswurffeder 9 befindet.

Die konvexe Krümmung des zweiten Abschnitts 31 kann eine Erhöhung der relativen Hubstrecke des Schlosshalters 2 bewirken, wodurch eine Beschleunigung des Schlosshalters 2, welche durch die Auswurffeder 9 verursacht ist, verringert werden kann, wenn der Schlosshalter 2 an dem zweiten Abschnitt 31 entlang gleitet. Wie in der allgemeinen Beschreibung erklärt, kann eine Verringerung der Beschleunigung des Schlosshalters 2 in dem zweiten Abschnitt 31 ein Geräusch während eines Anlagewechsels verringern.

Ein Anlagewechsel des Schenkels 27 während eines Auswerfens des Schlosshalters 2 von einer Anlage des Schenkels 27 an dem Schlosshalter 2 hin zu einer Anlage des Schenkels 27 an der Drehfalle 4 wird im Folgenden beschrieben. Ausgehend von der in FIG. 2a gezeigten Hauptraststellung der Drehfalle 4 wird die Sperrklinke 3 von der Sperrstellung, bevorzugt mittels eines elektrischen Antriebes, in die Passierstellung überführt. Die in Öffnungsdrehrichtung 7 freigegebene Drehfalle 4 wird mittels der Auswurffeder 9 über einen Kontakt zwischen dem Schlosshalter 2 und dem Lastarm 5 beschleunigt und in die in FIG. 2c gezeigte Position gedreht.

FIG. 2c zeigt die Drehfalle 4 in einer Position zwischen der Hauptraststellung und einer in FIG. 2e gezeigten Vorraststellung. Gegenüber der in FIG. 2b gezeigten Position der Drehfalle 4 ist der Schenkel 27 um einen Winkel 32 in Öffnungsdrehrichtung 7 gedreht und der Schlosshalter 2 um eine Hubstrecke 33 nach oben angehoben. Eine relative Hubstrecke des Schlosshalters 2 errechnet sich beispielsweise in der in FIG. 2c gezeigten Position der Drehfalle 4 aus dem Quotienten der Hubstrecke 33 als Zähler und dem überstrichenen Drehwinkel 32 des Schenkels 27 als Nenner. In der in FIG. 2c gezeigten Position der Drehfalle 4 liegt der Schenkel 27 an dem Schlosshalter 2 an, jedoch nicht an der Drehfalle 4 bzw. dem Mitnehmer 21. Weiterhin ist in der in FIG. 2c gezeigten Position der Drehfalle 4 die Abkröpfung 15 durch die Anschlagfläche 22 des Auslegers 23 der Sperrklinke 3 blockiert. Nach einer solcher Blockade dreht sich die Sperrklinke 3 beaufschlagt durch die Sperrklinkenfeder 10 in die Sperrstellung, welche in FIG. 2d gezeigt ist, wobei die Blockade durch den Ausleger 23 aufgehoben ist.

Ausgehend von der in FIG. 2c gezeigten Position der Drehfalle 4 wird die Drehfalle 4 mittels der Auswurffeder 9 über den Schlosshalter 2 und einen Kontakt zwischen dem Schlosshalter 2 und dem Lastarm 5 in Öffnungsdrehrichtung 7 gedreht. Kurz vor Erreichen, bevorzugt ungefähr bei einem Drehwinkel von 2 bis 5° vor Erreichen, der Vorraststellung der Drehfalle 4 liegt der Schenkel 27 an dem Mitnehmer 21 an. Gleichzeitig liegt der Schenkel 27 an dem Schlosshalter 2 an. Der zweite gekrümmte Abschnitt 31 erstreckt sich bevorzugt über den in den Figuren gezeigten Rändern in Richtung des offenen Endes des Schenkels 27 hinaus und ist in dieser Ausgestaltung derart konvex gekrümmt, dass der Schenkel 27 bei einem weiteren Verdrehen der Drehfalle 4 sowohl an dem Schlosshalter 2 als auch an dem Mitnehmer 21 unmittelbar anliegt. Dadurch kann eine Relativgeschwindigkeit zwischen dem Schenkel 27 und dem Mitnehmer 21 bei einem Auftreffen des Schenkels 27 auf den Mitnehmer 21 nahezu gegen Null reduziert werden, wobei ein Geräusch beim Auftreffen des Schenkels 27 auf den Mitnehmer 21 reduziert wird.

FIG. 2e zeigt die Drehfalle 4 in der Vorraststellung, wobei die Sperrklinke 3 den Fangarm 6 und damit die Drehfalle 4 in Öffnungsdrehrichtung 7 blockiert. In der Vorraststellung liegt der Schenkel 27 sowohl an dem Schlosshalter 2 als auch an dem Mitnehmer 21 und damit an der Drehfalle 4 unmittelbar an. Ausgehend von der in FIG. 2e gezeigten Vorraststellung der Drehfalle 4 wird die Sperrklinke 3 von der Sperrstellung hin zur Passierstellung gedreht. Dies kann bevorzugt auf manuellem Wege erfolgen. In der Passierstellung der Sperrklinke 3 ist die Drehfalle 4 in Öffnungsdrehrichtung 7 freigegeben und wird über einen direkten Kontakt zwischen dem Schenkel 27 und dem Mitnehmer 21 mittels der Auswurffeder 9 in die Öffnungsdrehrichtung 7 beschleunigt, wie in FIG. 2f gezeigt.

FIG. 1a zeigt die Drehfalle 4 in der Offenstellung, bei welcher die Drehfalle 4 gegenüber der in FIG. 2f gezeigten Position in Öffnungsdrehrichtung gedreht ist. In der Offenstellung ist ein Kontakt zwischen dem Schenkel 27 und dem Schlosshalter 2 aufgehoben und liegt der Schenkel 27 an dem Mitnehmer 21 an. Der, ausgehend von FIG. 2c über FIG. 2d, FIG. 2e, FIG. 2f bis hin zu FIG. 1a, gezeigte Bewegungsablauf zeigt einen Anlagewechsel des Schenkels 27 von dem Schlosshalter 2 zur Drehfalle 4, wobei der Schenkel 27 derart ausgebildet ist, dass ein Kraftschluss zwischen dem Schenkel 27 und dem Schlosshalter 2 realisiert ist. In jeder der beim Anlagewechsel erreichten Positionen der Drehfalle 4 ist Kraftschluss zwischen dem Schenkel 27 und dem Schlosshalter 2, entweder über einen direkten Kontakt zwischen dem Schenkel 27 und dem Schlosshalter 2 oder über einen direkten Kontakt des Schenkels 27 mit dem Mitnehmer 21 in Verbindung mit einem unmittelbaren Kontakt zwischen dem Fangarm 6 und dem Schlosshalter 2, vorgesehen.

Dieser Anlagewechsel bewirkt, dass der Schenkel 27 der Auswurffeder 9 einen größeren Winkelbereich als die Drehfalle 4 während des Anlagewechsels überstreichen kann. Dies hat den Vorteil, dass gegenüber einer Variante ohne einen solchen Anlagewechsel die Auswurffeder 9 stärker entspannt wird, wobei die Auswurffeder 9 eine höhere Arbeit mittelbar oder unmittelbar an den Schlosshalter 2 abgibt. Dies hat den Vorteil, dass die Auswurffeder 9 geringer dimensioniert werden kann und dadurch der Bauraum und das Gewicht der Sicherheitsvorrichtung 1 reduziert werden kann.

FIG. 4 zeigt eine Schnittansicht einer weiteren Ausgestaltung einer Sicherheitsvorrichtung 101 mit einem Schlosshalter 102, einer Sperrklinke 103 und einer Drehfalle 104, wobei die Drehfalle 104 einen Fangarm 106 mit einer Vorrast 112, einen Lastarm 105 mit einer Hauptrast 113, eine Öffnungsdrehrichtung 107, eine Schließdrehrichtung 108, eine Vorraststellung und eine Hauptraststellung aufweist und sich in FIG. 4 in der Hauptraststellung befindet. Bis auf den Schlosshalter 102 sind bevorzugt nahezu sämtliche Teile der Sicherheitsvorrichtung 101 an einem Schlosskasten 67 angeordnet, wobei der Schlosskasten 67 in einem eingebauten Zustand der Sicherheitsvorrichtung 101 in einem Kraftfahrzeug ortsfest eingebaut ist. Dies gilt ebenso bevorzugt für die Sicherheitsvorrichtung 1. Die Sicherheitsvorrichtung 101 weist weiterhin eine Auswurffeder 109 mit einem Schenkel 127 zum Auswerfen des Schlosshalters 102 auf, welche die Drehfalle 104 in die Öffnungsdrehrichtung 107 beaufschlagt. Die Sperrklinke 103 hat eine Sperrklinkenfeder 110, welche die Sperrklinke 103 in eine Sperrdrehrichtung 111 beaufschlagt. In der Vorraststellung der Drehfalle 104 umgreift die Sperrklinke 103 die Vorrast 112 und ist damit an dem Fangarm 106 eingerastet. In der Hauptraststellung der Drehfalle 104 umgreift die Sperrklinke 103 die Hauptrast 113 und ist damit an dem Lastarm 105 eingerastet.

Im Gegensatz zu der in den FIG. 1a bis 1f, 2a bis 2f und FIG. 3 gezeigten Ausgestaltung der Sicherheitsvorrichtung 1 ist der Schlosshalter 102 in der Hauptraststellung der Drehfalle 104 zwischen einer Drehachse 134 der Auswurffeder 109 und einer Drehachse 120 der Drehfalle 104 angeordnet. Dies hat den Vorteil einer einfacheren Ausführungsform im Vergleich zu der in FIG. 1a gezeigten Ausgestaltung. Die in FIG. 4 gezeigte Ausführungsform sieht weiterhin in einer bevorzugten Variante vor, dass die Auswurffeder 109 den Schlosshalter 102 unmittelbar bei einer Bewegung der Drehfalle 104 von der Hauptraststellung in Öffnungsdrehrichtung 107 bis hin in eine Offenstellung beaufschlagt, in welcher der Schlosshalter 102 von der Drehfalle 104 freigegeben ist.

Die Sicherheitsvorrichtung 101 hat weiterhin ein Blockierelement 161, welches eine Blockadestellung und eine Freigabestellung aufweist. In der Blockadestellung des Blockierelementes 161 ist die Drehfalle 104 in die Schließdrehrichtung 108 blockiert. In der Freigabestellung des Blockierelementes 161 ist die Drehfalle 104 von dem Blockierelement 161 in Schließdrehrichtung 108 freigegeben und ein Absenken des Schlosshalters 102 ermöglicht. Eine Bewegung des Blockierelementes 161 von der Freigabestellung in die Blockadestellung ist mittels der Sperrklinke 103 gesteuert. Die Sicherheitsvorrichtung 101 weist zudem ein Blockierfederelement 163 auf, wobei das Blockierfederelement 163 beispielsweise eine Drehfeder oder ein elastisches Verbindungselement zwischen der Sperrklinke 103 und dem Blockierelement 161 sein kann und ein indirektes Antreiben des Blockierelementes 161 mittels der Sperrklinke 103 ermöglicht. Weiterhin hat die Sicherheitsvorrichtung 101 einen Mitnehmer 164, über welchen das Blockierelement 161 direkt mittels der Sperrklinke 103 entgegen der Sperrdrehrichtung 111 antreibbar ist.

Die Drehfalle 104, die Auswurffeder 109, die Sperrklinke 103, das Blockierfederelement 163 und das Blockierelement 161 funktionieren in gleicher Weise zusammen wie die Drehfalle 4, die Auswurffeder 9, die Sperrklinke 3, das Blockierfederelement 63 und das Blockierelement 61 in den FIG. 1a bis 1f. Beispielsweise blockiert das Blockierelement 161 in der Blockadestellung die Drehfalle 104 in Schließdrehrichtung 108 ähnlich wie es bei der Sicherheitsvorrichtung 1 mit dem Blockierelement 61 und der Drehfalle 4 in FIG. 1d gezeigt ist, wobei das Blockierelement 161 im Gegensatz zu dem Blockierelement 61 an einem Dorn 69 des Fangarmes 106 anliegt. Die in FIG. 4 gezeigte Stellung der Sicherheitsvorrichtung 101 entspricht der Stellung der Sicherheitsvorrichtung 1, welche in FIG. 1e gezeigt ist, nur dass das Blockierelement 161 sich noch nicht vollständig in Sperrdrehrichtung 111 von der Blockierstellung hin zur Freigabestellung bewegt hat. Eine mögliche Variante dieser Ausführungsform kann vorsehen, dass der Schenkel 127 in gleicher Weise wie der Schenkel 27 der in FIG. 1a gezeigten Ausführungsform einen ersten gekrümmten Abschnitt 28 und einen zweiten gekrümmten Abschnitt 31 hat, auch einen ersten und einen zweiten Abschnitt mit jeweils vergleichbaren Krümmungsradien beziehungsweise Krümmungsradienverläufen entlang des Schenkels 127 aufweist.

Des Weiteren weist die Sicherheitsvorrichtung 101 einen Auslösehebel 68 auf, welcher mit einem Ausleger der Sperrklinke 103 zusammenwirkt. Eine Drehung des Auslösehebels 68 in Sperrdrehrichtung 111 bewirkt eine Drehung der Sperrklinke 103 entgegengesetzt zur Sperrdrehrichtung 111 in Richtung der Passierstellung der Sperrklinke 103. Bevorzug ist der Auslösehebel 68 zum einen elektrisch zum Lösen der Drehfalle 104 aus der Hauptraststellung betätigbar, beispielsweise über einen Elektromotor, und zum anderen manuell zum Lösen der Drehfalle 104 aus der Vorraststellung betätigbar.

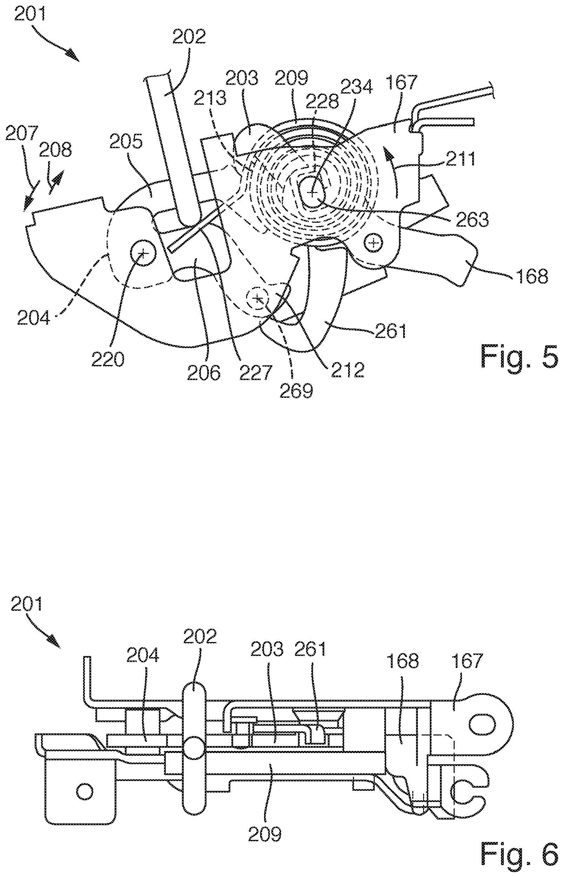

FIG. 5 zeigt eine Schnittansicht einer weiteren Ausgestaltung einer Sicherheitsvorrichtung 201 mit einem Schlosshalter 202, einer Sperrklinke 203 und einer Drehfalle 204, wobei die Drehfalle 204 einen Fangarm 206, einen Lastarm 205, eine Öffnungsdrehrichtung 207, eine Schließdrehrichtung 208, eine Vorrast 212, eine Hauptrast 213, eine Vorraststellung und eine Hauptraststellung aufweist und sich in der Hauptraststellung befindet. Bis auf den Schlosshalter 202 sind bevorzugt nahezu sämtliche Teile der Sicherheitsvorrichtung 201 an einem Schlosskasten 167 angeordnet, wobei der Schlosskasten 167 in einem eingebauten Zustand der Sicherheitsvorrichtung 201 in einem Kraftfahrzeug ortsfest eingebaut ist. Die Sicherheitsvorrichtung 201 weist weiterhin eine Auswurffeder 209 mit einem Schenkel 227 zum Auswerfen des Schlosshalters 202 auf, welche die Drehfalle 204 in Öffnungsdrehrichtung 207 beaufschlagt.

Im Gegensatz zu der in den FIG. 1a bis 1f, 2a bis 2f und FIG. 3 gezeigten Ausgestaltung der Sicherheitsvorrichtung 1 ist der Schlosshalter 202 in der Hauptraststellung der Drehfalle 204 zwischen einer Drehachse 234 der Auswurffeder 209 und einer Drehachse 220 der Drehfalle 204 angeordnet. Dies hat den Vorteil einer einfacheren Ausführungsform im Vergleich zu der in FIG. 1a gezeigten Ausgestaltung. Die in FIG. 5 gezeigte Ausführungsform sieht weiterhin in einer Variante vor, dass die Auswurffeder 209 den Schlosshalter 202 unmittelbar bei einer Bewegung der Drehfalle 204 von der Hauptraststellung in Öffnungsdrehrichtung 207 bis hin in eine Offenstellung beaufschlagt, in welcher der Schlosshalter 202 von der Drehfalle 204 freigegeben ist.

Die Sicherheitsvorrichtung 201 hat weiterhin ein Blockierelement 261, welches eine Blockadestellung und eine Freigabestellung aufweist. In der Blockadestellung des Blockierelementes 261 ist die Drehfalle 204 in Schließdrehrichtung 208 blockiert. In der Freigabestellung des Blockierelementes 261 ist die Drehfalle 204 von dem Blockierelement 261 in Schließdrehrichtung 208 freigegeben und ein Absenken des Schlosshalters 202 ermöglicht. Eine Bewegung des Blockierelementes 261 von der Freigabestellung in die Blockadestellung ist mittels der Sperrklinke 203 gesteuert. Die Sicherheitsvorrichtung 201 weist zudem ein Blockierfederelement 263 auf, wobei das Blockierfederelement 263 beispielsweise eine Drehfeder oder ein elastisches Verbindungselement zwischen der Sperrklinke 203 und dem Blockierelement 261 sein kann und ein indirektes Antreiben des Blockierelementes 261 mittels der Sperrklinke 203 ermöglicht.

Die Drehfalle 204, die Auswurffeder 209, die Sperrklinke 203, das Blockierfederelement 263 und das Blockierelement 261 funktionieren in gleicher Weise zusammen wie die Drehfalle 4, die Auswurffeder 9, die Sperrklinke 3, das Blockierfederelement 63 und das Blockierelement 61 in den FIG. 1a bis 1f. Beispielsweise blockiert das Blockierelement 261 in der Blockadestellung die Drehfalle 204 in Schließdrehrichtung 208 ähnlich wie es bei der Sicherheitsvorrichtung 1 mit dem Blockierelement 61 und der Drehfalle 4 in FIG. 1d gezeigt ist, wobei das Blockierelement 261 im Gegensatz zu dem Blockierelement 61 an einem Dorn 269 des Fangarmes 206 anliegt. Die in FIG. 5 gezeigte Stellung der Sicherheitsvorrichtung 201 entspricht der Stellung der Sicherheitsvorrichtung 1, welche in FIG. 1e gezeigt ist, nur dass das Blockierelement 261 sich noch nicht vollständig in Sperrdrehrichtung 211 von der Blockierstellung hin zur Freigabestellung bewegt hat. Eine mögliche Variante dieser Ausführungsform kann vorsehen, dass der Schenkel 227 in gleicher Weise, wie der Schenkel 27 der in FIG. 1a gezeigten Ausführungsform einen ersten gekrümmten Abschnitt 28 und einen zweiten gekrümmten Abschnitt 31 hat, auch einen ersten und einen zweiten Abschnitt mit jeweils vergleichbaren Krümmungsradien beziehungsweise Krümmungsradienverläufen entlang des Schenkels 227 aufweist.

Im Gegensatz zu der in FIG. 4 gezeigten Ausführungsform sind bei der in FIG. 5 gezeigten Ausgestaltung die Sperrklinke 203, die Auswurffeder 209 und das Blockierelement 261 um eine gemeinsame Drehachse 234 gelagert, was eine kompaktere Bauweise der Sicherheitsvorrichtung 201 und eine Einsparung der in FIG. 4 gezeigten Drehachse 134 der Auswurffeder 109 und damit eine Gewichtseinsparung ermöglicht. Weiterhin ist die in FIG. 5 gezeigte Sicherheitsvorrichtung 201 im Gegensatz zu der Sicherheitsvorrichtung 1 und der Sicherheitsvorrichtung 101 mit einer Spiralfeder als Auswurffeder 209 ausgerüstet, was eine schmalere Bauform der Sicherheitsvorrichtung 201 gegenüber den Sicherheitsvorrichtungen 1 und 101, bei welchen die Auswurffedern 9 und 109 jeweils als Schenkelfedern ausgeführt sind, ermöglicht.

FIG. 6 zeigt eine Draufsicht der Sicherheitsvorrichtung 201 nach FIG. 5. In FIG. 6 ist ersichtlich, dass die Auswurffeder 209 in etwa an Breite einnimmt, wie die Sperrklinke 203 und das Blockierelement 261 zusammen an Breite einnehmen. Die Ausgestaltung der Auswurffeder 209 als Spiralfeder kann insbesondere eine gemeinsame Lagerung der Sperrklinke 203, der Auswurffeder 209 und des Blockierelementes 261 an der gemeinsamen Drehachse 234 vereinfachen. Hierbei ist insbesondere die schmalere Bauweise der Auswurffeder 209 als Spiralfeder gegenüber einer Schenkelfeder vorteilhaft, weil Lager einer Lagerpaarung für die gemeinsame Drehachse 234 näher aneinander angeordnet werden können und dadurch die Drehachse 234 kürzer ausgebildet sein kann und eine höhere Traglast der Drehachse 234 ermöglicht ist, um mehrere Bauteile zu lagern.

FIG. 5 zeigt weiterhin, dass ein inneres Ende 228 der Auswurffeder 209 an einem Verbindungselement 263 angreift und gegen dieses abgestützt ist. Das Verbindungselement 263 verbindet vorteilhaft das innere Ende 228 mit der Sperrklinke 203 und dem Blockierelement 261. Bevorzugt ist eine formschlüssige Verbindung zwischen dem inneren Ende 228 und der Sperrklinke 203 vorgesehen. Über die Verbindung zwischen dem inneren Ende 228 und der Sperrklinke 203 stützen sich die Sperrklinke 203 und die Auswurffeder 209 bevorzugt gegenseitig ab, wobei zusätzliche Bauteile zum Abstützen der Sperrklinke 203 und der Auswurffeder 209 eingespart werden können, wobei an einem Gewicht und einem notwendigen Bauraum der Sicherheitsvorrichtung 201 eingespart werden kann.

Bevorzugt verbindet das Verbindungselement 263 das Blockierelement 261 mit der Auswurffeder 209 beziehungsweise mit der Sperrklinke 203 kraftschlüssig und elastisch. In dieser Ausgestaltung kann das Verbindungselement 263 darüber hinaus die Funktion des Blockierfederelementes 63 der Sicherheitsvorrichtung 1 beziehungsweise des Blockierfederelementes 163 der Sicherheitsvorrichtung 101 übernehmen. Somit kann das Verbindungselement 263 zum einen die Sperrklinke 203 gegen die Auswurffeder 209 abstützen und ist zum anderen als Blockierfederelement ausgebildet. Zum Beispiel kann das Verbindungselement 263 an einem ersten Ende die Sperrklinke 203 und die Auswurffeder 209 und an einem zweiten Ende das Blockierelement 261 aufnehmen und zwischen den beiden Enden elastisch ausgebildet sein.

Des Weiteren weist die Sicherheitsvorrichtung 201 einen Auslösehebel 168 auf, welcher mit einem Ausleger der Sperrklinke 203 zusammenwirkt. Eine Drehung des Auslösehebels 168 in Sperrdrehrichtung 211 bewirkt eine Drehung der Sperrklinke 203 entgegengesetzt zur Sperrdrehrichtung 211 in Richtung der Passierstellung der Sperrklinke 203. Bevorzug ist der Auslösehebel 168 zum einen elektrisch zum Lösen der Drehfalle 204 aus der Hauptraststellung betätigbar, beispielsweise über einen Elektromotor, und zum anderen manuell zum Lösen der Drehfalle 204 aus der Vorraststellung betätigbar.

## Patentansprüche

1. Sicherheitsvorrichtung (1; 101; 201) für ein Kraftfahrzeug, aufweisend
• einen Schlosshalter (2; 102; 202),
• eine Sperrklinke (3; 103; 203) mit einer Sperrdrehrichtung (11; 111; 211),
• eine Drehfalle (4; 104; 204) mit einer Öffnungsdrehrichtung (7; 107; 207), einer Schließdrehrichtung (8; 108; 208) und einer Hauptraststellung,
• ein Blockierelement (61; 161; 261) mit einer Blockadestellung und einer Freigabestellung,
• eine Sperrklinkenfeder (10; 110), welche die Sperrklinke (3; 103; 203) in der Sperrdrehrichtung (11; 111; 211) beaufschlagt,
• ein Blockierfederelement (63; 163), das an dem Blockierelement (61; 161; 261) angreift,
wobei
• in der Blockadestellung des Blockierelementes (61; 161; 261) die Drehfalle (4; 104; 204) in Schließdrehrichtung (8; 108; 208) blockiert ist,
• in der Freigabestellung des Blockierelementes (61; 161; 261) die Drehfalle (4; 104; 204) von dem Blockierelement (61; 161; 261) in Schließdrehrichtung (8; 108; 208) freigegeben und in der Hauptraststellung der Drehfalle (4; 104; 204) ein Absenken des Schlosshalters (2; 102; 202) ermöglicht ist,
• eine Bewegung des Blockierelementes (61; 161; 261) von der Freigabestellung in die Blockadestellung mittels der Sperrklinke (3; 103; 203) gesteuert ist,
**dadurch gekennzeichnet, dass**
• das Blockierfederelement (63; 163) in der Blockadestellung des Blockierelementes (61; 161; 261) eine Verzögerung einer Drehung des Blockierelementes (61; 161; 261) in der Sperrdrehrichtung (11; 111; 211) bewirkt.

2. Sicherheitsvorrichtung (1; 101; 201) nach Anspruch 1, **dadurch gekennzeichnet, dass**
• das Blockierelement (61; 161; 261) und die Sperrklinke (3; 103; 203) um eine gemeinsame Drehachse (62; 162; 263) drehbar gelagert sind.

3. Sicherheitsvorrichtung (1; 101; 201) nach Anspruch 1 oder 2, **dadurch gekennzeichnet, dass**
• in einer Position der Drehfalle (4; 104; 204), in welcher die Drehfalle (4; 104; 204) von der Hauptraststellung aus in der Öffnungsdrehrichtung (7; 107; 207) gedreht ist, das Blockierelement (61; 161; 261) die Blockadestellung einnimmt,
• in der Hauptraststellung der Drehfalle (4; 104; 204) das Blockierelement (61; 161; 261) die Freigabestellung einnimmt.

4. Sicherheitsvorrichtung (1; 101; 201) nach einem der vorhergehenden Ansprüche, **dadurch gekennzeichnet, dass**
• die Sperrklinkenfeder (10; 110) und das Blockierfederelement (63; 163) separat voneinander ausgebildet sind.

5. Sicherheitsvorrichtung (1; 101; 201) nach einem der vorhergehenden Ansprüche, **dadurch gekennzeichnet, dass**
• die Sicherheitsvorrichtung (1; 101; 201) ein aufeinander abgestimmtes Trägheitssystem aufweist,
• das Blockierfederelement (63; 163), ein Massenträgheitsmoment des Blockierelementes (61; 161; 261) um eine Drehachse des Blockierelementes (61; 161; 261), ein Massenträgheitsmoment der Sperrklinke (3; 103; 203) um eine Drehachse der Sperrklinke (3; 103; 203) und die Sperrklinkenfeder (10; 110) derart aufeinander abgestimmt sind, dass die Sperrklinke (3; 103; 203) in der Passierstellung eine höhere Drehbeschleunigung in die Sperrdrehrichtung (11; 111; 211) als das Blockierelement (61; 161; 261) hat.

6. Sicherheitsvorrichtung (1; 101; 201) nach einem der vorhergehenden Ansprüche, **dadurch gekennzeichnet, dass**
• die Sicherheitsvorrichtung (1; 101; 201) eine Auswurffeder (9; 109; 209) mit einem Schenkel (27; 127; 227) zum Auswerfen des Schlosshalters (2; 102; 202) aufweist,
• der Schenkel (27; 127; 227) in der Hauptraststellung der Drehfalle (4; 104; 204) an dem Schlosshalter (2; 102; 202) anliegt,
• in einer Zwischenstellung der Drehfalle (4; 104; 204), in welcher sich die Drehfalle (4; 104; 204) zwischen der Hauptraststellung und der Offenstellung befindet, der Schenkel (2; 102; 202) die Drehfalle (4; 104; 204) unmittelbar in die Öffnungsdrehrichtung (7; 107; 207) beaufschlagt.

7. Sicherheitsvorrichtung (1; 101; 201) nach dem vorhergehenden Anspruch, **dadurch gekennzeichnet, dass**
• der Schenkel (27; 127; 227) einen ersten Abschnitt (28) hat,
• der erste Abschnitt (28) in der Hauptraststellung eine nahezu waagerechte Ausrichtung aufweist und an dem Schlosshalter (2) anliegt.

8. Sicherheitsvorrichtung (1; 101; 201) nach einem der vorhergehenden Ansprüche, **dadurch gekennzeichnet, dass**
• die Sicherheitsvorrichtung (1; 101; 201) eine Auswurffeder (9; 109; 209) aufweist,
• die Auswurffeder (9; 109; 209) als Spiralfeder ausgebildet ist.

9. Verfahren zum Betreiben einer Sicherheitsvorrichtung (1; 101; 201), die gemäß Anspruch 1 ausgebildet ist, mit den folgenden Schritten:
• Drehen der Drehfalle (4; 104; 204) in Schließdrehrichtung (8; 108; 208);
• Bewegen des Blockierelementes (61; 161; 261) in die Blockadestellung;
• Abbremsen der Drehfalle (4; 104; 204) mittels des Blockierelementes (61; 161; 261);
• Bewegen des Blockierelementes (61; 161; 261) in die Freigabestellung;
• Bereitstellen einer Schutzlage, welche zugleich eine Verriegelungsstellung der Sicherheitsvorrichtung (1; 101; 201) ist.

10. Verfahren nach dem vorigen Anspruch, mit den folgenden Schritten:
• Drehen der Drehfalle (4; 104; 204) aus der Schutzlage heraus in Schließdrehrichtung (8; 108; 208);
• Aufnehmen einer Aufprallabfangenergie.

11. Verfahren zum Öffnen einer Sicherheitsvorrichtung (1; 101; 201), die gemäß Anspruch 1 ausgebildet ist, mit den folgenden Schritten:
• Auslenken der Sperrklinke (3; 103; 203) aus einer Sperrstellung;
• Drehen der Drehfalle (4; 104; 204) ausgehend von der Hauptraststellung in Öffnungsdrehrichtung (7; 107; 207);
• Verzögern der Drehfalle (4; 104; 204);
• Bewegen der Sperrklinke (3; 103; 203) in Richtung der Sperrstellung;
• Einrasten der Drehfalle (4; 104; 204) in der Vorraststellung.

## Claims

1. Safety device (1; 101; 201) for a motor vehicle, comprising
• a latch holder (2; 102; 202),
• a pawl (3; 103; 203) having a locking direction of rotation (11; 111; 211),
• a catch (4; 104; 204) having an opening direction of rotation (7; 107; 207), a closing direction of rotation (8; 108; 208) and a main ratchet position,
• a blocking element (61; 161; 261) having a blocking position and a release position,
• a pawl spring (10; 110) which acts on the pawl (3; 103; 203) in the locking direction of rotation (11; 111; 211),
• a blocking spring element (63; 163) which acts on the blocking element (61; 161; 261),
wherein
• the catch (4; 104; 204) is blocked in the closing direction of rotation (8; 108; 208) when the blocking element (61; 161; 261) is in the blocking position,
• the catch (4; 104; 204) is released by the blocking element (61; 161; 261) in the closing direction of rotation (8; 108; 208) when the blocking element (61; 161; 261) is in the release position, and lowering of the latch holder (2; 102; 202) is made possible when the catch (4; 104; 204) is in the main ratchet position,
• a movement of the blocking element (61; 161; 261) from the release position into the blocking position is controlled by means of the pawl (3; 103; 203),
**characterized in that**
• in the blocking position of the blocking element (61; 161; 261), the blocking spring element (63, 163) causes a delay in rotation of the blocking element (61; 161; 261) in the locking direction of rotation (11; 111; 211).

2. Safety device (1; 101; 201) according to claim 1, **characterized in that**
• the blocking element (61; 161; 261) and the pawl (3; 103; 203) are mounted so as to be rotatable about a common axis of rotation (62; 162; 263).

3. Safety device (1; 101; 201) according to either claim 1 or claim 2, **characterized in that**,
• in a position of the catch (4; 104; 204) in which the catch (4; 104; 204) is rotated out of the main ratchet position in the opening direction of rotation (7; 107; 207), the blocking element (61; 161; 261) assumes the blocking position,
• in the main ratchet position of the catch (4; 104; 204), the blocking element (61; 161; 261) assumes the release position.

4. Safety device (1; 101; 201) according to any of the preceding claims, **characterized in that**
• the pawl spring (10; 110) and the blocking spring element (63; 163) are formed separately from one another.

5. Safety device (1; 101; 201) according to any of the preceding claims, **characterized in that**
• the safety device (1; 101; 201) comprises a matched inertia system,
• the blocking spring element (63; 163), a moment of inertia of the blocking element (61; 161; 261) about an axis of rotation of the blocking element (61; 161; 261), a moment of inertia of the pawl (3; 103; 203) about an axis of rotation of the pawl (3; 103; 203) and the pawl spring (10; 110) are matched to one another such that the pawl (3; 103; 203) in the passing position has a higher rotational acceleration in the locking direction of rotation (11; 111; 211) than the blocking element (61; 161; 261).

6. Safety device (1; 101; 201) according to any of the preceding claims, **characterized in that**
• the safety device (1; 101; 201) comprises an ejection spring (9; 109; 209) having a limb (27; 127; 227) for ejecting the latch holder (2; 102; 202),
• the limb (27; 127; 227) rests against the latch holder (2; 102; 202) in the main ratchet position of the catch (4; 104; 204),
• in an intermediate position of the catch (4; 104; 204), in which the catch (4; 104; 204) is located between the main ratchet position and the open position, the limb (2; 102; 202) acts on the catch (4; 104; 204) directly in the opening direction of rotation (7; 107; 207).

7. Safety device (1; 101; 201) according to the preceding claim, **characterized in that**
• the limb (27; 127; 227) has a first portion (28),
• the first portion (28), in the main ratchet position, has an almost horizontal orientation and rests against the latch holder (2).

8. Safety device (1; 101; 201) according to any of the preceding claims, **characterized in that**
• the safety device (1; 101; 201) comprises an ejection spring (9; 109; 209),
• the ejection spring (9; 109; 209) is designed as a spiral spring.

9. Method for operating a safety device (1; 101; 201) which is designed according to claim 1, comprising the following steps:
• rotating the catch (4; 104; 204) in the closing direction of rotation (8; 108; 208);
• moving the blocking element (61; 161; 261) into the blocking position;
• braking the catch (4; 104; 204) by means of the blocking element (61; 161; 261);
• moving the blocking element (61; 161; 261) into the release position;
• providing a protective position which is also a latched position of the safety device (1; 101; 201).

10. Method according to the preceding claim, comprising the following steps:
• rotating the catch (4; 104; 204) out of the protective position in the closing direction of rotation (8; 108; 208);
• absorbing an impact absorption energy.

11. Method for opening a safety device (1; 101; 201) which is designed according to claim 1, comprising the following steps:
• deflecting the pawl (3; 103; 203) out of a locking position;
• rotating the catch (4; 104; 204) in the opening direction of rotation (7; 107; 207) starting from the main ratchet position;
• delaying the catch (4; 104; 204);
• moving the pawl (3; 103; 203) in the direction of the locking position;
• engaging the catch (4; 104; 204) in the pre-ratchet position.

## Revendications

1. Dispositif de sécurité (1 ; 101 ; 201) pour un véhicule à moteur, comportant
• un porte-serrure (2 ; 102 ; 202),
• un cliquet de verrouillage (3 ; 103 ; 203) présentant un sens de rotation de fermeture (11 ; 111 ; 211),
• un pêne pivotant (4 ; 104 ; 204) présentant un sens de rotation d'ouverture (7 ; 107 ; 207), un sens de rotation de fermeture (8 ; 108 ; 208) et une position d'encliquetage principale,
• un élément de blocage (61 ; 161 ; 261) présentant une position de blocage et une position de libération,
• un ressort de cliquet de verrouillage (10 ; 110) qui agit sur le cliquet de verrouillage (3 ; 103 ; 203) dans le sens de rotation de fermeture (11 ; 111 ; 211),
• un élément de ressort de blocage (63 ; 163) qui vient en prise sur l'élément de blocage (61 ; 161 ; 261),
dans lequel,
• dans la position de blocage de l'élément de blocage (61 ; 161 ; 261), le pêne pivotant (4 ; 104 ; 204) est bloqué dans le sens de rotation de fermeture (8 ; 108 ; 208),
• dans la position de libération de l'élément de blocage (61 ; 161 ; 261), le pêne pivotant (4 ; 104 ; 204) est libéré par l'élément de blocage (61 ; 161 ; 261) dans le sens de rotation de fermeture (8 ; 108 ; 208), et dans la position d'encliquetage principale du pêne pivotant (4 ; 104 ; 204), un abaissement du porte-serrure (2 ; 102 ; 202) est rendu possible,
• un déplacement de l'élément de blocage (61 ; 161 ; 261) de la position de libération vers la position de blocage est commandé au moyen du cliquet de verrouillage (3 ; 103 ; 203), **caractérisé en ce que**
• l'élément de ressort de blocage (63 ; 163) dans la position de blocage de l'élément de blocage (61 ; 161 ; 261) amène une décélération de rotation de l'élément de blocage (61 ; 161 ; 261) dans le sens de rotation de fermeture (11 ; 111 ; 211).

2. Dispositif de sécurité (1 ; 101 ; 201) selon la revendication 1, **caractérisé en ce que**
• l'élément de blocage (61 ; 161 ; 261) et le cliquet de verrouillage (3 ; 103 ; 203) sont montés à rotation autour d'un axe de rotation commun (62 ; 162 ; 263).

3. Dispositif de sécurité (1 ; 101 ; 201) selon la revendication 1 ou 2, **caractérisé en ce que**,
• dans une position du pêne pivotant (4 ; 104 ; 204) dans laquelle le pêne pivotant (4 ; 104 ; 204) est mis en rotation à partir de la position d'encliquetage principale dans le sens de rotation d'ouverture (7 ; 107 ; 207), l'élément de blocage (61 ; 161 ; 261) prend la position de blocage,
• dans la position d'encliquetage principale du pêne pivotant (4 ; 104 ; 204), l'élément de blocage (61 ; 161 ; 261) prend la position de libération.

4. Dispositif de sécurité (1; 101 ; 201) selon l'une des revendications précédentes, **caractérisé en ce que**
• le ressort de cliquet de verrouillage (10 ; 110) et l'élément de ressort de blocage (63 ; 163) sont réalisés séparément.

5. Dispositif de sécurité (1 ; 101; 201) selon l'une des revendications précédentes, **caractérisé en ce que**
• le dispositif de sécurité (1 ; 101 ; 201) comporte un système d'inertie adapté,
• l'élément de ressort de blocage (63 ; 163), un moment d'inertie de masse de l'élément de blocage (61 ; 161 ; 261) autour d'un axe de rotation de l'élément de blocage (61 ; 161 ; 261), un moment d'inertie de masse du cliquet de verrouillage (3 ; 103 ; 203) autour d'un axe de rotation du cliquet de verrouillage (3 ; 103 ; 203) et le ressort de cliquet de verrouillage (10 ; 110) sont adaptés l'un à l'autre de sorte que le cliquet de verrouillage (3 ; 103 ; 203) dans la position de passage présente une accélération de rotation plus élevée dans le sens de rotation de fermeture (11 ; 111 ; 211) que l'élément de blocage (61 ; 161 ; 261).

6. Dispositif de sécurité (1 ; 101 ; 201) selon l'une des revendications précédentes, **caractérisé en ce que**
• le dispositif de sécurité (1 ; 101 ; 201) comporte un ressort d'éjection (9 ; 109 ; 209) comportant une branche (27 ; 127 ; 227) destinée à éjecter le porte-serrure (2 ; 102 ; 202),
• la branche (27 ; 127 ; 227) repose sur le porte-serrure (2 ; 102 ; 202) dans la position d'encliquetage principale du pêne pivotant (4 ; 104 ; 204),
• dans une position intermédiaire du pêne pivotant (4 ; 104 ; 204) dans laquelle le pêne pivotant (4 ; 104 ; 204) se trouve entre la position d'encliquetage principale et la position ouverte, la branche (2 ; 102 ; 202) agit directement sur le pêne pivotant (4 ; 104 ; 204) dans le sens de rotation d'ouverture (7 ; 107 ; 207).

7. Dispositif de sécurité (1 ; 101 ; 201) selon la revendication précédente, **caractérisé en ce que**
• la branche (27 ; 127 ; 227) comporte une première section (28),
• la première section (28) présente une orientation presque horizontale dans la position d'encliquetage principale et repose sur le porte-serrure (2).

8. Dispositif de sécurité (1 ; 101 ; 201) selon l'une des revendications précédentes, **caractérisé en ce que**
• le dispositif de sécurité (1 ; 101 ; 201) comporte un ressort d'éjection (9 ; 109 ; 209),
• le ressort d'éjection (9 ; 109 ; 209) est réalisé sous la forme d'un ressort spiral.

9. Procédé de fonctionnement d'un dispositif de sécurité (1 ; 101 ; 201) réalisé selon la revendication 1, comportant les étapes suivantes :
• la mise en rotation du pêne pivotant (4 ; 104 ; 204) dans le sens de rotation de fermeture (8 ; 108 ; 208) ;
• le déplacement de l'élément de blocage (61 ; 161 ; 261) dans la position de blocage ;
• le freinage du pêne pivotant (4 ; 104 ; 204) au moyen de l'élément de blocage (61 ; 161 ; 261) ;
• le déplacement de l'élément de blocage (61 ; 161 ; 261) dans la position de libération ;
• la réalisation d'une couche de protection qui est également une position de verrouillage du dispositif de sécurité (1 ; 101 ; 201).

10. Procédé selon la revendication précédente, comportant les étapes suivantes :
• la mise en rotation du pêne pivotant (4 ; 104 ; 204) hors de la position de protection dans le sens de rotation de fermeture (8 ; 108 ; 208) ;
• l'extraction d'une énergie absorbant les chocs.

11. Procédé d'ouverture d'un dispositif de sécurité (1 ; 101 ; 201) réalisé selon la revendication 1, comportant les étapes suivantes :
• la déviation du cliquet de verrouillage (3 ; 103 ; 203) d'une position de verrouillage ;
• la mise en rotation du pêne pivotant (4 ; 104 ; 204) à partir de la position d'encliquetage principale dans le sens de rotation d'ouverture (7 ; 107 ; 207) ;
• la décélération du pêne pivotant (4 ; 104 ; 204) ;
• le mouvement du cliquet de verrouillage (3 ; 103 ; 203) dans le sens de la position de verrouillage ;
• l'encliquetage du pêne pivotant (4 ; 104 ; 204) dans la position de pré-encliquetage.
